(19) **Europäisches Patentamt / European Patent Office / Office européen des brevets**

(11) **EP 3 945 072 B1**

(12) **EUROPEAN PATENT SPECIFICATION**

(45) Date of publication and mention
of the grant of the patent:
**28.05.2025 Bulletin 2025/22**

(51) International Patent Classification (IPC):
**C02F 1/30** (2023.01)   **C02F 1/48** (2023.01)
**C02F 1/68** (2023.01)   **C02F 1/00** (2023.01)
**C02F 1/44** (2023.01)

(21) Application number: **21187823.6**

(22) Date of filing: **26.07.2021**

(52) Cooperative Patent Classification (CPC):
**C02F 1/485; C02F 1/005; C02F 1/30; C02F 1/68;**
C02F 1/441; C02F 2209/005; C02F 2209/42;
C02F 2209/44

(54) **SYSTEMS AND METHODS FOR THE LARGE SCALE ACTIVATION OF WATER**

SYSTEME UND VERFAHREN ZUR AKTIVIERUNG VON WASSER IM GROSSEN MASSSTAB

SYSTÈMES ET PROCÉDÉS POUR L'ACTIVATION À GRANDE ÉCHELLE DE L'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2020 US 202063057132 P
30.03.2021 US 202117217830**

(43) Date of publication of application:
**02.02.2022 Bulletin 2022/05**

(73) Proprietor: **Smirnov, Igor
Jurmala 2008 (LV)**

(72) Inventor: **Smirnov, Igor
Jurmala 2008 (LV)**

(74) Representative: **Tahhan, Nader Isam Mark
Isipat
Am Birkenacker 13
79199 Kirchzarten (DE)**

(56) References cited:
**CN-A- 101 168 454    US-A- 6 022 479**

- **SMIRNOV IGOR ET AL: "Moleculaire Resonantie Effect Technologie: De Dynamische Effecten op de Menselijke Fysiologie", 1 June 2017 (2017-06-01), XP055869733, Retrieved from the Internet <URL:http://www. brainportbiotechsolutions.com/pdf/ Moleculaire_Resonantie_Effect_Technologie. pdf> [retrieved on 20211206]**
- **SMIRNOV IGOR: "MRET Treated Water as a Possible Agent for Inhibition of Coronavirus Life Cycle", INTERNATIONAL JOURNAL OF BIOPROCESS AND BIOTECHNOLOGICAL ADVANCES, 8 April 2020 (2020-04-08), XP055869749, Retrieved from the Internet <URL:https://www.scitcentral.com/article/41/ 1425/ MRET-Treated-Water-as-a-Possible-Agent-for-In hibition-of-Coronavirus-Life-Cycle> [retrieved on 20211206]**
- **J. D. EAVES ET AL: "Hydrogen bonds in liquid water are broken only fleetingly", PNAS, 13 September 2005 (2005-09-13), pages 13019 - 13022, XP055014315, Retrieved from the Internet <URL:http://dfpcorec-p/wf/web/citenpl/citenpl. html> [retrieved on 20111208], DOI: 10.1073/ pnas.0505125102**

**Description**

**TECHNICAL FIELD**

The invention relates to systems and methods for activating aqueous liquids using molecular resonant effect technology and more specifically to large scale systems for the large scale activation of aqueous liquids and uses of such activated liquids, which affect biological systems, including the inhibition of tumor cell proliferation, NK cell mediated cytolysis of tumor cells, the prevention of amyloid plaques, the treatment of psoriasis, and the inhibition of microbial growth.

**BACKGROUND OF THE INVENTION**

Water is the foundation of all life on earth. Every part of the body is dependent on water. The functions of our glands and organs will eventually deteriorate if they are not nourished with good clean water. Metabolism, digestion, blood flow and cellular reproduction all depend on proper water supply.

Molecular resonance effect technology has been previously described in US patent no. 6,022,479. This technology imprints a subtle low frequency electromagnetic field into a body of water, which changes the clathrate structure of the water, thereby creating a long-range dynamic multilayer water molecular structure similar to the structures of cell waters in biological systems. Structural changes in the water clathrate after activation have been confirmed by Nuclear Magnetic Resonance and High Voltage Photography testing.

While Molecular resonance effect technology is itself a known process for activating liquids, its production has been limited to small scale, such as the treatment of one or a few gallons of water. Described herein are systems and methods for a significantly larger scale production of activated water and newly developed uses for activated liquids, such as activated water, that until now have remained unknown.

**BRIEF SUMMARY OF THE INVENTION**

The invention discloses a large scale system for the activation of water and discloses additional uses of water that has been activated via molecular resonance effect technology.

In particular, disclosed is a large scale system for the activation of water or an aqueous liquid, the system including: at least two activation tanks for storing water or aqueous liquid during activation and having a switch that indicates the tank is full, wherein the switch is operably connected to a controller with control panel that instructs a valve to close when receiving a stop signal from the switch, thereby stopping the flow of water into the tank when full; an activation assembly operably connected to each activation tank, each activation assembly having: a solenoid having a column wrapped in wiring, wherein the solenoid is configured to generate a magnetic field between 198,950 and A/m and 1,989,500 A/m (2,500 and 25,000 Oersteds); a polymeric composition held within the column and exposed to the magnetic field, the polymeric composition composed of a polymer having a linear chain length of at least 38 monomer units, and dispersed within the polymeric composition is a mixture having between 0.04 -30 parts by weight per 100 parts by weight of polymer, at least one element from each of two classes: a first class being a metal, metal oxide, metal nitrate and/or a metal sulfate, a second class being an inorganic acid, and a third class being an aminoaldehyde; a cluster of light emitted diodes (LEDs) emitting at the polymer composition, an emission wavelength between 540 nm and 560 nm, the cluster of LEDS configured to flash at a frequency between 7.2 Hz and 8.2 Hz; and a means for powering the activation assembly. According to the invention, each activation tank stores at least 7580 liters (2,000 gallons) of liquid during activation and each column holds at least 32,000 cm$^3$ of the polymeric composition.

In preferred embodiments, for each of two 11,370 liters (3000 gallon) activation tanks, the corresponding activation assembly includes 7 LEDs, and the polymeric composition has a volume of about 32,000 cm$^3$. In some embodiments, the system also includes a reverse osmosis system upstream of the liquid activation assembly.

Also disclosed is a method of water activation and thus aqueous liquid or solution activation, which includes the steps of: providing the large scale system for the activation of water or aqueous liquid; filling each of two activation tanks with water; powering the activation assembly to produce magnetic field between 198,950 and A/m and 1,989,500 A/m (2,500 and 25,000 Oersteds) and flashing the LEDs a frequency between 7.2 Hz and 8.2 Hz for at least 1 hour, thereby inducing low frequency oscillations of 0.5 to 5.0 Hz and exposing the low frequency oscillations to water within the activation tanks.

Also disclosed is use of the activated water for reducing or inhibiting tumor cell proliferation. The approach includes, after the activation, exposing tumor cells to the activated water. In another embodiment the approach includes providing a subject suffering from or at risk of suffering from tumor cell proliferation, activating water or an aqueous liquid according to the method of water or aqueous liquid activation using the large scale system for the activation of water; and administering the activated water or liquid containing the activated water to the subject daily.

Also disclosed is the use of the activated water for enhancing NK cell killing of tumor cells. The approach includes, after activation, exposing NK cells to the activated water or a liquid containing activated water, where the water is activated according to the method of water activation using the large scale system for the activation of water or liquid; and exposing the NK cells to tumor cells.

Also disclosed is use of the activated water for preventing or reducing amyloid plaques. The approach includes providing a subject suffering from or at risk of suffering from the formation of amyloid plaques; activating water according to the method of water activation using the large scale system for the activation of water; and administering the activated water or liquid containing the activated water to the subject daily.

Also disclosed is use of the activated water for preventing or ameliorating effects of a skin disorder. The approach includes providing a subject suffering from or at risk of suffering from a skin disorder; activating water according to the method of water activation using the large scale system for the activation of water; and administering the activated water or liquid containing the activated water to the subject. In some embodiments, the skin disorder is psoriasis. In some embodiments, the activated water or liquid is a component of a cream or gel. In some embodiments the activated water is applied topically.

Also disclosed is use of the activated water for reducing or inhibiting microbial growth. The approach includes applying to a surface at risk of microbial growth, a composition including activated water or a liquid containing activated water, where the activated water is activated according to the method of water activation using the large scale system for the activation of water. The activated water is substantially free of anti-microbial additives, thereby relying on the activated water itself for antimicrobial effect.

Also disclosed is use of the activated water for enhancing the effects of an antibiotic. The approach includes providing a surface at risk of microbial growth; and administering an antibiotic in combination with the activated water, where the activated water is activated according to the method of water activation using the large scale system for the activation of water or liquid.

Also disclosed is the use of activated water for accelerating seed germination. The approach includes activating water according to the method of water activation using the large scale system for the activation of water; and maintaining a plant seed under moist conditions through germination, wherein the moisture is from the activated water.

Also disclosed is use of the activated water for reducing or inhibiting viral invasion of human cells, such as by SARS-CoV. The approach includes providing a subject having cells at risk of viral invasion; activating water according to the method of water activation using the large scale system for the activation of water; and administering the activated water or liquid containing the activated water to the subject daily.

Also disclosed is use of the activated water for preventing or reducing bacterial infection, such as by *Staphylococcus.* The approach includes providing a subject at risk of bacterial infection; activating water according to the method of water activation using the large scale system for the activation of water; and administering the activated water or liquid containing the activated water to the subject daily.

## BRIEF DESCRIPTION OF THE DRAWINGS

The invention can be more easily understood, and further advantages and uses thereof can be more readily apparent, when considered in view of the detailed description and the following drawings.

FIG. 1 depicts an exemplary large scale system 100 for the activation of aqueous liquids such as water.

FIG. 2 depicts and exemplary control panel 200 for the system 100 of FIG. 1.

FIG. 3A is an exemplary activation assembly 116 for use in the system 100 of FIG. 1.

FIG. 3B and FIG. 3C are photographs showing the cluster of LEDs 126 for use with the column 120.

FIG. 4 is a photograph of ascitic fluid samples obtained from peritoneal cavities of mice with transplanted Ehrlich ascitic carcinoma (EAC) at day 8 after inoculation, where the left five samples were from mice treated with water activated for 30 min and the right five samples are control (no treatment).

FIG.5 is a table comparing the efficacy of prophylactic and therapeutic treatment using activated water on the inhibition of EAC tumor growth in mice.

FIGS. 6A-C are charts comparing the volume (FIG.6A), number of viable cells (FIG. 6B) and viable cell concentration per mL (FIG. 6C) collected from ascitic fluid from mice undergoing prophylactic treatment (samples 1-5) and therapeutic treatment (samples 6-10) compared to control.

FIG. 7 is photograph of an exemplary mouse on day 18 after EAC inoculation comparing (A) the control group and (B) the prophylactic treatment groups (t= 30 min).

FIG. 8 is a photograph showing side by side the mice from prophylactic treatment groups that received water activated for 30 min.

FIG. 9 is a photograph on day 21 after inoculation showing the EAC inoculation was lethal to the entire control group (left side), while some mice from the prophylactic treatment group (t= 45 min) survived.

FIG. 10 is a table showing an increase in the mean lifespan and median lifespan of mice within the prophylactic and therapeutic treatment groups compared to control.

FIG. 11A is a graph showing the survival rate over time of mice under the prophylactic treatment regimen for each of t=15 min, t=30 min, t-45 min, t=60 min and t=30 min (old activated water) compared to control. FIG. 11B is a graph showing the survival rate over time of mice under the therapeutic treatment regimen for each of t=15 min, t=30 min, t=45 min, t=60 min and t=30 min (old activated water) compared to control.

**FIG. 12** is a graph demonstrating the percentage increase in life span of each group of the prophylactic and therapeutically treated mice.

**FIG. 13** is a photograph showing the volume of ascitic fluid obtained from peritoneal cavities of mice at day 8 after inoculation that underwent prophylactic treatment with water activated for 45 min (right 5 samples) compared to control (left 5 samples).

**FIG. 14** is a photograph showing the volume of ascitic fluid obtained from peritoneal cavities of mice at day 8 after inoculation that underwent prophylactic treatment with water activated for 15 min (left 3 samples) compared to control (right 3 samples).

**FIG. 15** is a table comparing the efficacy of the different treatment regimens on the inhibition of tumor growth.

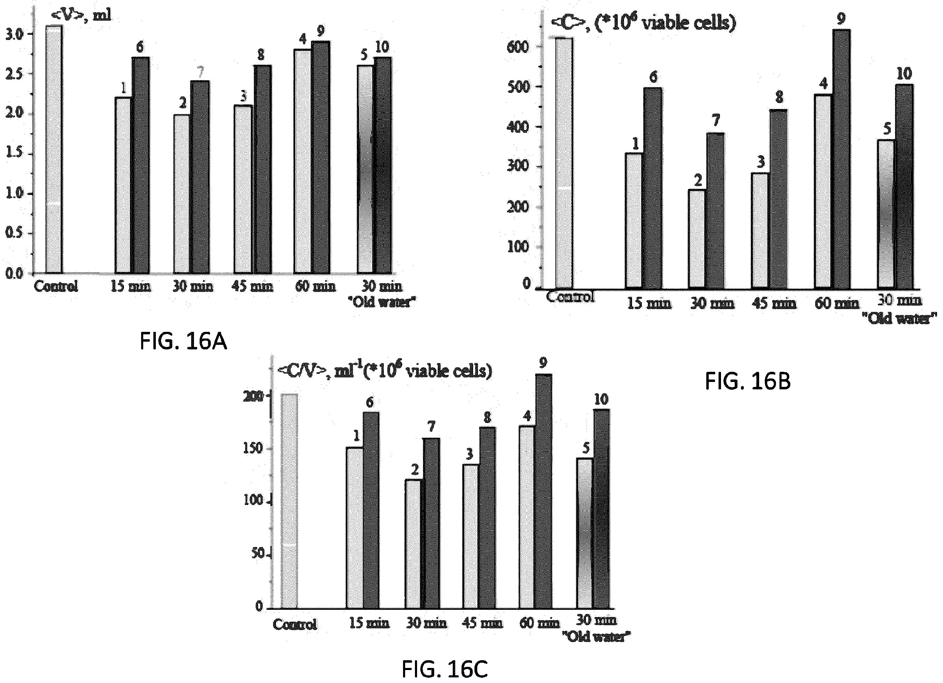

**FIG. 16A** is a graph grouping the average volume (V) of ascitic fluid obtained from control, prophylactic regimen (1-5), and the therapeutic regimen (6-10) according to water activation time on day 8. **FIG. 16B** is a graph grouping the average number of viable tumor cells (C) obtained from control, prophylactic regimen (1-5), and the therapeutic regimen (6-10) according to water activation time on day 8. **FIG. 16C** is a graph grouping the average number of viable tumor cells per mL of ascitic fluid (C/V) obtained from control, prophylactic regimen (1-5), and the therapeutic regimen (6-10) according to water activation time on day 8.

**FIG. 17A** is a photograph of mice on day 17 after inoculation with ascitic sarcoma 37 comparing the prophylactic treatment group (t= 15 min) on the left and the control group on the right. **FIG. 17B** is a photograph taken 20 days after tumor cell inoculation, showing side by side the mice from the prophylactic treatment group that received water activated for 15 min (left side) compared to mice from the therapeutic treatment group that also received water activated for 15 min.

**FIG. 18** is a table showing the difference in the average lifespan (mean and median) within the prophylactic and therapeutic treatment groups compared to control.

**FIG. 19A** is a graph showing the survival rate over time of mice under the prophylactic treatment regimen for each of t=15 min, t=30 min, t-45 min, t=60 min and t=30 min (old activated water) compared to control. **FIG. 19B** is a graph showing the survival rate over time of mice under the therapeutic treatment regimen for each of t=15 min, t=30 min, t=45 min, t=60 min and t=30 min (old activated water) compared to control.

**FIG. 20** is a graph summarizing the percentage increase in life span of each group of the prophylactic and therapeutically treated mice for the different treatment regimens.

**FIG. 21** is a table summarizing the effects of activated water on cytotoxic activity of NK cells against tumor cells.

**FIG. 22** is a graph summarizing the results of activated water feeding on cytotoxic activity of lymphocytes with natural killer cell activity.

**FIG. 23** is a graph summarizing results from the cytotoxic index change from mice receiving different types of activated water in comparison to non-activated water as control.

**FIG. 24** is a graph showing the difference in brain area between treated (MRET) and control (Reg) in the TgCRND8-amyloid disease mouse model.

**FIG. 25** is a graph comparing the difference in mortality rate between treated (MRET) and control (Reg) mice in the TgCRND8-amyloid disease mouse model.

**FIG. 26 and FIG. 27** are photographs of the callus tissue cells mutated to produced uncontrolled growth, where culture media was activated for 60 minutes (left), 30 minutes (center), or not activated (right).

**FIG. 28 and FIG. 29** are photographs from a repeated experiment to confirm results, where callus tissue cells were mutated to produce uncontrolled growth, and culture media was activated for 60 minutes (left), 30 minutes (center), or not activated (right).

**FIG. 30** is a table summarizing the initial average weight of one segment of mutated callus tissue (in mg) before and after culturing in the presence of activated media (t= 30 min, t=60 min) compared to control. Also shown is the corresponding increase in weight and the coefficient of inhibition of callus tissue growth for each group.

**FIG. 31** is a chart showing results from the table of **FIG. 30,** where column 1 represents the average increase of single segment weight of tissue in milligrams when placed in an activated medium for 60 minutes with a dilution ratio of 1:2.5. Column 2 represents the average increase of single segment weight of tissue in milligrams when placed in an activated medium for 30 minutes with a dilution ratio of 1:2.5. Column 3 of represents the average increase of single segment weight of tissue in milligrams when placed in a control sample such as distilled water.

**FIG. 32** is a series of photographs showing the inhibition of *E. coli* growth on beef-agar plates after 23 hours, where the left panel is control, the middle panel include 30 minutes of agar activation and the right panel shows 60 minutes of agar activation.

**FIG. 33** is chart summarizing results after 18 hours and 25 hours of bacteria growing on beef-agar plates, where the left columns of each chart represent the control sample. The middle columns of each chart represent the results from 30 minutes of activation. The far-right column of each chart represents results from 60 minutes of activation.

**FIG. 34A-B** provide photographs demonstrating the enhancing effects of 30 minute (0.5 hr) and 60 minute (1 hr) activation on antibiotics combating the growth of bacteria on beef agar plates compared to control (K). The following antibiotics are shown: (1) Clindamycin, (2) Kanamycin, (3) Cephalexin, (4) Cephtriaxon, (5) Levomiticin, (6) Ciphran, (7) Ampicillin, (8) Tetracykline, (9) Cephaclor, (10) Karbenicyline.

**FIG. 35** is a photograph showing control (K), 30 minute activation (0.5hr), and 60 minute activation (1 hr) on the antibiotic enhancing effect of antibiotics to prevent growth of bacteria on beef agar plates.

**FIG. 36** is a schematic of the experimental layout of cells for astrocyte/PMBC irradiation, showing control (No MRET) and treated (MRET).

**FIG. 37** is a chart providing results after 24 hours of treatment with either activated water (MRET) or nonactivated water (no MRET) on irradiated astrocytes.

**FIG. 38** is a table showing the corresponding average values and standard deviation of quadruplicate wells after 24 hours of treatment with either activated media (MRET) or nonactivated media (no MRET) on irradiated astrocytes following the plate layout of **FIG. 37.**

**FIG. 39** is a chart providing the results after 72 hours of treatment with either activated water (MRET) or nonactivated water (no MRET) on irradiated astrocytes.

**FIG. 40** is a table showing the corresponding average values and standard deviation of quadruplicate wells after 72 hours of treatment with either activated media (MRET) or nonactivated media (no MRET) on irradiated astrocytes following the plate layout of **FIG. 36.**

**FIG. 41** is a chart providing the results after 24 hours of treatment with either activated water (MRET) or nonactivated water (no MRET) on irradiated PBMCs.

**FIG. 42** is a table showing the corresponding average values and standard deviation of quadruplicate wells after 24 hours of treatment with either activated media (MRET) or nonactivated media (no MRET) on irradiated PBMCs following the plate layout of **FIG. 36.**

**FIG. 43** is a chart providing the results after 72 hours of treatment with either activated water (MRET) or nonactivated water (no MRET) on irradiated PBMCs.

**FIG. 44** is a table showing the corresponding average values and standard deviation of quadruplicate wells after 72 hours of treatment with either activated media (MRET) or nonactivated media (no MRET) on irradiated PBMCs following the plate layout of **FIG. 36.**

**FIG. 45** is a chart showing the effect of 60 min of water activation, 30 min of water activation and no activation on average plant height, stem weight and leaf area.

**FIG. 46** is a series of photographs showing plants grown with water activated for 30 min (left), water activated for 60 minutes (center) and regular water (right).

**FIG. 47** depicts the structure of 2019-nCoV in the pre-fusion confirmation.

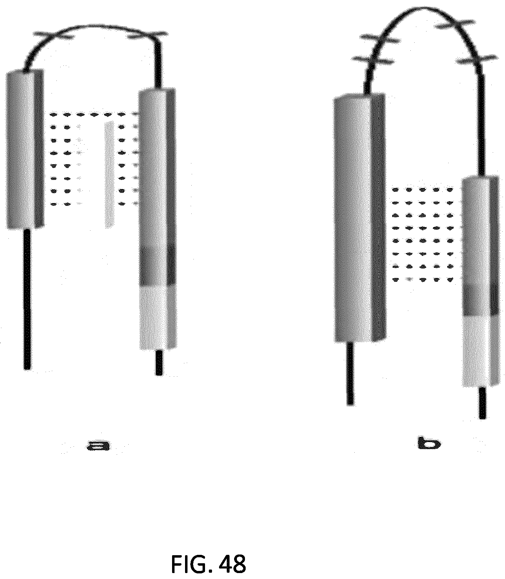

**FIG. 48** is a drawing showing the similarity between the fusion proteins of HIV-1 and SARS-CoV. The HIV-1 gp41 (a) and the equivalent S2 protein from the SARS-CoV (b) are shown. A Leucine/Isoleucine heptad repeat adjacent to the N-terminus of both proteins appears in red. The C-terminal heptad repeat is in green. Cysteine residues (purple) confining a loop structure is located between the two heptad repeats. An aromatic residues-rich motif is marked blue, and the transmembrane segment is in orange. A peptide corresponding to the C-terminal heptad repeat, which acts as potent inhibitor of HIV-1 entry into the cell, appears in yellow.

**FIG. 49** is a chart showing the Phagocytic Index of neutrophils and macrophages in two weeks of experiment (object of phagocytosis - *Staphylococcus aureus):* 1 - Control group; 2 - Mice on MRET water (preventive for 4 weeks); 3 - Mice on MRET water (preventive for 2 weeks).

**FIG. 50** is a chart showing the Phagocytic Number of neutrophils and macrophages in two weeks of experiment (object of phagocytosis - *Staphylococcus aureus*) 1 - Control group; 2 - Mice on MRET water (preventive for 4 weeks); 3 - Mice on MRET water (preventive for 2 weeks).

## DETAILED DESCRIPTION OF EMBODIMENTS

The present disclosure expands upon the disclosure of US Patent No. 6,022,479, by the same inventor, which describes a device and method for the activation of liquids using a technology referred to as molecular resonance effect technology (MRET). Broadly, the activation device includes a polymeric body into which is incorporated small quantities of inorganic and organic materials. As will be described in more detail in the passages that follow, the polymeric body is simultaneously exposed to strong electromagnetic field and a cluster of yellow LEDs flashing at a frequency of 7.8 Hz or about 7.8 Hz. Simultaneously exposing the polymeric body to each causes the emission of a low-frequency resonant electromagnetic field. When exposing a body of liquid such as water or other aqueous solution (e.g. cell culture media or other water based liquids) to this low-frequency resonant electromagnetic field, the water or other aqueous liquid is referred to as "activated". As such "activated water" and "activated liquid" as used throughout this disclosure describe water or water-based solutions, such as saline solutions or cell culture solutions that have been subjected to this low-frequency, resonant electromagnetic field for at least 15 minutes.

Without being bound by theory, activation of water results in a modification of the clathrate structure. The structural changes to the clathrate have been studied in detail using electrochemical impedance spectroscopy (EIS). The activation of the water alters various physical and electrodynamic characteristics of the water. This activation optimizes its compatibility with the cell water, by forming a polarized-oriented multilayer molecular structure. As a result of this optimization, the activated water enters biological systems with easier bioavailability and faster assimilation. The activated liquid can then be used as a partial or complete substitute for non-activated liquid in numerous industrial chemical and biochemical reactions. **TABLE 1** compares the properties of the activated water (MRET) compared to other water sources (reproduced from The Science of Healing Waters (Singapore: Times Books International, C2002), where ideal is a pH 7.0-7.5; Redox <28; and Resistivity of 6,000.

**TABLE 1: Biological Assessment of Water**

| Water Type | pH | Redox | Resistivity |
|---|---|---|---|
| Alkaline | 7.28 | 20.8 | 2,953 |
| Distilled (Tap) | 6.74 | 19.4 | 6,105 |
| Magnetized | 7.03 | 20.2 | 4,938 |
| MRET | 7.21 | 20.5 | 6,334 |
| Calastoga | 7.86 | 31.8 | 8,580 |
| Crystal Geyer | 7.79 | 33.6 | 5,660 |
| Distilled (Crystal Water) | 7.12 | 31.4 | 25,000 |
| Evian | 7.06 | 33.2 | 1,970 |
| Tap (St. Louis) | 9.57 | 35.2 | 2,760 |

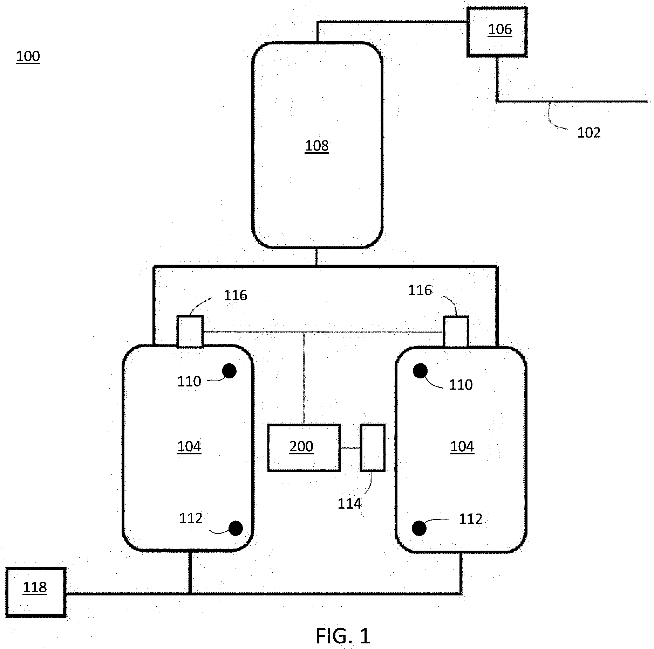

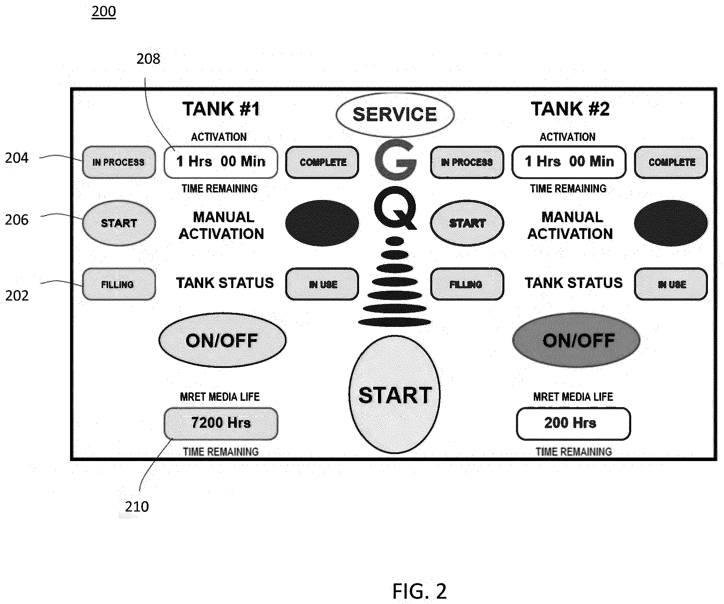

Turning now to **FIG. 1** and **FIG. 2,** what is disclosed is a large scale system **100** and method for the activation of liquids. By "large scale" it is meant that the system **100** is configured to activate thousands of gallons of water or water-based solutions in a single run or batch, such as 7580 liters, 11.370 liters (2000 gallons, 3000 gallons) or more. Liquid enters system **100** through water supply line **102.** Depending on the preferences of the user, liquid can be pumped into system **100** using a pump or can be drawn through piping by vacuum. Prior to delivery into activation tanks **104,** liquid is preferably pretreated using reverse osmosis system **106,** a liquid filter system, and/or a liquid purification system as known in the art to which the invention belongs to remove sediment and particulates from liquid supply. After which, pretreated liquid is optionally stored in storage tank **108** (here a 7580 liters / 3000 gal. storage tank **108** is shown) prior to delivering liquid to one or more activation tanks **104,** thereby increasing efficiency of the pretreatment step.

After optional pretreatment and storage steps, liquid is transferred to activation tank **104.** As storage tank **108** empties it can be refilled with pretreated liquid. Filling of activation tank **104** continues until tank full switch **110** is triggered, which closes valve (not shown) to stop inflow of liquid into activation tank **104.** As tank **104** fills, FILLING indicator **202** on control panel **200** can be illuminated to indicate status. Though described primarily with reference to a single tank **104.** The artisan will appreciate that two or more activation tanks **104** can be filled simultaneously or in series, however, in such embodiments, it is preferred that each activation tank **104** have dedicated switches **110, 112,** thereby permitting each to be independently controlled. Though all may share a same control panel **200** and a same means for powering **114** the activation assembly **116** (e.g. power supply). Nonlimiting exemplary switches **110,112** include float switches and optical switches. As activation tank **104** fills, corresponding IN PROCESS indicator **204** can be illuminated on control panel **200.**

Once activation tank **104** is filled and full switch **110** triggered, activation of liquid can begin automatically by instructing operation of activation assembly **116** or can be held in a standby mode, waiting for timed activation program to instruct operation or waiting to receive manual operation instructions through control panel **200,** such as by pressing START button **206.**

Though primarily described with reference to the large scale system **100** for the activation of water or aqueous liquids, the activation assembly **116** can also be used with smaller scale activation of water or aqueous liquids. In instances where the volume of water to be activated is less than 75.8 liters (20 gallons), the activation assembly **116** can be run for as little as 10 minutes, but it is generally preferred to run for 15 minutes or for 30 minutes.

Turning back to the large scale system **100,** once activation assembly **116** begins operation for the activation of liquids, COUNTDOWN window **208** on control panel **200** indicates time remaining for activation process and IN PROCESS indicator **204** is preferably illuminated. Activation time may vary depending on factors such as liquid volume. As generally guidance, activation of 7580 liters (3,000 gallons) of liquid generally takes between 1 and 2 hours but longer times can also be used. Activation timing is preferably determined and programmed into software of system **100,** however as an alternative, liquid can be tested using electrochemical impedance spectroscopy (EIS) as previously described in the literature.

Upon completion of liquid activation, activated liquid can be transferred into bottling system 118, where activated liquid is bottled for desired uses. Once activation tank **104** is emptied or near emptied, tank empty switch **112** is activated, which instructs closing of emptying valve (not shown). Preferably, MEDIA LIFE indicator **210** is updated to display remaining life of media in activation assembly **116**. Life of media in activation assembly **116** is preferably preprogrammed into system **100,** such as by preprograming a number of activation cycles performed by system **100.** When MEDIA LIFE indicator **210** indicates servicing of activation assembly **116** is required or desirable, control panel **200** can notify user as such.

Turing now to activation assembly **116,** the system **100** preferably couples each activation tank 104 with a dedicated activation assembly **116** for activating liquid in each activation tank **104** independently. Activation assembly **116** is preferably joined to activation tank **104** above liquid fill level and preferably activates liquid in activation tank **104** through a port.

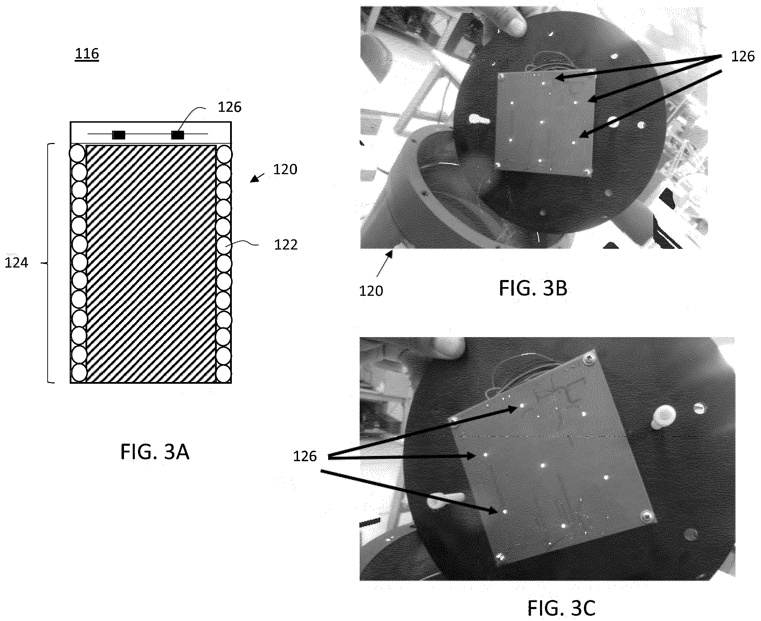

As shown more clearly in **FIG. 3A-3C,** activation assembly **116** includes an elongated column **120** (e.g. approximately 40.64 cm (16 inch) tall with a diameter of about 16.5 cm (6.5) inch) filled with a polymer composition (e.g. about 32,000 cm$^3$ or in this instance 32,154 cm$^3$), which will be described in more detail in the passages that follow. Naturally, a larger or smaller activation assembly **116** could be used for larger or smaller activation tanks **104.** Bottom end of column **120** projects through top of activation tank **104** but preferably remains above fill line (defined by full switch **110**). A bobbin of copper wires **122** is wrapped around the column **120** to form a solenoid **124.** Preferably, the solenoid **124** includes 10,000 or about 10,000 windings of AWG-14 copper wiring **122.** The top part of the solenoid **124** is open to a cluster of light emitting diodes (LEDs) **126.** Though non-limiting, the cluster of LEDS **126** can be a group of 7 yellow LEDs **126** or about 7 LEDs **126** mounted to a printed circuit board (PCB) suspending inches above column **120.** During activation, the LEDS **126** preferably oscillate at the same frequency as electric field.

Direct current is delivered to the solenoid **124** so that the solenoid **124** operates at 50v DC, 25mA and 2 kohms to produce a magnetic field of 198,950 - 1,989,500 A/m (2,500-25,000 Oersteds). The field oscillates at a frequency of 7.8 Hertz (Hz) or about 7.8 Hz (e.g. 7.2-8.1 Hz). At the same time, PCB instructs the LED cluster **126** to oscillate at the same frequency. The polymer composition becomes energized and emits low frequency oscillations which causes the liquid to become and remain activated.

Turning now more specifically to the polymer composition, the polymer composition includes a polymer matrix in which the polymer has a linear chain length of at least 38 monomer units. Both thermosetting and thermoplastic polymers may be used. It is preferred to use polymers which possess comparatively high values of relative permittivity (dielectric constant), since that provides for easier displacement of both bonding and non-bonding electrons in these polymers by the external magnetic field and thus enhanced continuity with the electromagnetic and optical response of the incorporated materials. The polymers selected must, however, be capable of absorbing visible light radiation (v=400-800 nm); absorption of optical (visible) radiation occurs in the polymers by irreversible non-radiative loss effects. Polymers which exhibit this capability include polyurethanes, epoxies, and furans. Polyurethane resins are well known polymers and are widely described in the literature. Typical descriptions can be found in Mark et al. (eds.), KIRK-OTHMER CONCISE ENCYCLOPEDIA OF CHEMICAL TECHNOLOGY, "Urethane Polymers", pp. 1211-1212 (1985); Rubin (ed.), HANDBOOK OF PLASTIC MATERIALS AND TECHNOLOGY, chs. 41 and 42, pp. 501-524 (1990); and Juran (ed.), Modern Plastics Encyclopedia 88, 64:10A, pp. 97-98, 122,124, 546 (October 1987). Similarly, epoxy polymers can be found described in many references, including the aforementioned Mark et al. (eds.), KIRK-OTHMER CONCISE ENCYCLOPEDIA OF CHEMICAL TECHNOLOGY, "Epoxy Resins", pp. 431-433 (1985); Rubin (ed.), HANDBOOK OF PLASTIC MATERIALS AND TECHNOLOGY, ch. 72, pp. 829-844 (1990); and Juran (ed.), Modern Plastics Encyclopedia 88, 64:10A, pp. 114, 516-517 (October 1987). Also, furan (or furfuyl) polymers can be found described in many references, including the aforementioned Mark et al. (eds.), KIRK-OTHMER CONCISE ENCYCLOPEDIA OF CHEMICAL TECHNOLOGY, "Furan Derivatives", pp. 542-544 (1985.

Incorporated throughout (i.e., impregnated or filled into) the polymer resin matrix, in finely divided form, are a number of different materials, all selected so that the polymeric activation body containing these materials when subjected to the 198,950 - 1,989,500 A/m (2,500-25,000 Oersteds) magnetic field responds to the 7.2-8.2 Hz frequencies and 400-800 nm wavelengths of the emitted light and resonates to produce electromagnetic oscillations of low frequency which enhance and intensify the normal coronal discharge of the incorporated materials within the polymeric matrix. The frequency of these resultant oscillations is generally in the range of 0.5-5.0 Hz.

The incorporated materials are selected from several classes of compounds, of which at least two classes must be dispersed in the impregnated or filled polymer, in finely divided form, and at a concentration of from 0.04-30 parts by weight per 100 parts by weight of polymer, to form the activating polymer matrix. These classes of compounds are (a) metals and metal salts including metals, oxides, nitrates, sulfates or tartrates of Groups 1a, 3a, 4a, 5a, 5b, 6b and 8b elements, preferably aluminum, antimony, boron, chromium, iron, lead, nickel, niobium, osmium or potassium; (b) silicates and carbonates, such as those from the calcite family, quartz family and jade family, as well as from shells of marine organisms, which are primarily carbonates and silicates of elements such as calcium, copper, sodium and aluminum, as well as various forms of silica itself; (c) inorganic acids, preferably weaker inorganic acids (pH $\geqq 3.0$.. preferably $\geqq 24.5$), such as boric acid (pH=5.2); (d) aminoaldehydes and pyridines, and (e) analgesics. In a particularly preferred embodiment, the incorporated materials include Chromium oxide ($Cr_2O_3$); Citric acid ($C_6H_8O_7$); Agar powder; Manganese chloride ($MnCl_2$); and Riboflavin ($C_{17}H_{20}N_4O_6$).

The above described system **100** was tested by filling each of two activation tanks **104** with reverse osmosis treated water, and powering each corresponding activation assembly **116.** Water was then tested using electrochemical impedance spectroscopy (EIS) as previously described in the literature. The EIS analysis confirmed that the water had been activated.

As will be described in more detail in the examples that follow, there are various benefits of providing activated water to various biological systems. In particular, activated water is shown to have antitumor effects, properties that reduce both brain plaque area and density and alter the cytotoxic activity of lymphocytes. The activated water is also shown to have the ability to control the growth of abnormally proliferating cells and *E. coli.* Activated water is also shown to amplify the efficiency of some antibiotics and provide benefits in the treatment of psoriasis and other diseases. Activated water is also shown to inhibit or reduce viral infection (e.g. SARS-CoV) and bacterial infection (e.g. *Staphylococcus*). Examples of some of these applications are now discussed in more detail in the examples that follow.

## EXAMPLE 1

### INHIBITING TUMOR CELL PROLIFERATION USING ACTIVATED WATER

Among the beneficial uses of activated water as disclosed herein is for reducing or inhibiting tumor cell proliferation. An exemplary use includes providing a subject suffering from or at risk of suffering from tumor growth; activating water or liquid by exposing the water or liquid to low frequency oscillations of 0.5 to 5.0 Hz; and administering the activated water or liquid to the subject daily. The water or liquid is activated using an activation assembly that simultaneously applies an alternating electric current at a frequency between 7.2 Hz to 8 Hz and applies light at a wavelength between 400 nm and 800 nm to a polymer composition that in response produces the low frequency oscillations. Though activation times may vary, currently preferred activation times of the volumes tested range from 15 minutes to 60 minutes, more preferably with a time from 25-35 minutes and a most preferred activation time of 30 minutes.

The subject is preferably human but the activated water can also be used in veterinary medicine, such as for either domesticated or wild animals, including livestock.

Among the tumors that can be treated include those found in breast cancer, prostate cancer, renal cancer, intestinal cancer, malignant gliomas, osteosarcoma, malignant melanoma, pancreatic cancer, malignant lymphomas and esophageal cancer.

In some embodiments, the tumor to be treated is a sarcoma. Examples of soft sarcomas that may be treated to reduce or inhibit cancer cell proliferation include angiosarcoma, fibrosarcoma, a gastrointestinal stromal tumor, Kaposi's sarcoma, liposarcoma, leiomyosarcoma, malignant fibrous histiocytoma, neurofibrosarcoma, rhabdomyosarcoma and synovial sarcoma. Bone sarcomas, such as osteosarcoma, Ewing's sarcoma, and chondrosarcoma can also be treated.

In support of the above, the prophylactic and therapeutic use of activated water is demonstrated with respect to Ehrlich Ascites Carcinoma (Ehrlich cells, EAC). In particular, the prophylactic and therapeutic use of activated water increased tumor inhibition and increased lifespan in an accepted EAC model.

Ehrlich Ascites Carcinoma (Ehrlich cells, EAC), a spontaneous murine mammary adenocarcinoma, is a well-established model in tumor biology. EAC model has largely been used for studying tumor pathogenesis and development of anti-tumorigenic agents. *See* Egawa, J., Ishioka, K. & Ogata, T. Effect of irradiation and chemotherapeutic agents on the capillaries of Ehrlich ascites carcinoma of mice. Acta radiologica: oncology, radiation, physics. Biology 18, 535-543 (1979); Simon, P., Burlingham, W. J., Conklin, R. & Fondy, T. P. N-bromoacetyl-beta-D-glucosamine tetra-O-acetate and N-bromoacetyl-beta-D-galactosamine tetra-O-acetate as chemotherapeutic agents with immunopotentiating effects in Ehrlich ascites tumor-bearing mice. Cancer research 39, 3897-3902 (1979). In this example the prophylactic and therapeutic antitumor effects of different fractions of molecular resonance effect technology-activated water were tested on the tumor model of Ehrlich ascitic carcinoma.

Procedurally, five different fractions of activated water were prepared to elucidate antitumor effects of activated water over different durations of activation. Four water fractions were activated for 15, 30, 45 or 60 min. Also, a large volume of water was activated for 30 min and stored at 4.0°C for about 45 days. This water also was used in the study. This fraction of activated water was named as "old activated water". Investigations with "old activated water" were aimed to research the influence of activated water "aging" on antitumor and immunostimulatory effects *in vitro* and *in vivo.* Analogous control investigations using non-activated distilled water were also carried out.

Inbred adult male BALB/c mice at 11 weeks of age and having a corporal weight of 23 - 24 grams were used.

BALB/c mice (genetic formula "bbcc", H-2 a is the major histocompatibility complex allele) are white mice which are very susceptible to various oncogenous viruses.

In summary, 220 mice were assigned to either a prophylactic action group (100 mice), a therapeutic action group (100 mice), or a control group (20 mice). The prophylactic action group was further split into 5 different prophylactic treatment regimens of 20 mice each (5*20=100). The prophylactic groups are also referred to as water fractions 1-5. The prophylactic treatment regimen included feeding mice daily with the different MRET activated water fractions (15, 30, 45, 60, old water) for up to fourteen days prior to inoculation. Mice where then inoculated intraperitoneally with 200,000 Ehrlich ascitic carcinoma (EAC) cells and the day after inoculation the same feeding regimen continued.

The therapeutic action group was split into 5 different therapeutic treatment regimens of 20 mice each (5*20=100). The therapeutic groups are referred to as Water Fractions 6-10. The therapeutic treatment regimen included feeding all mice daily with non-activated water fractions for up to fourteen days prior to inoculation. Mice where then inoculated intraperitoneally with 200,000 Ehrlich ascitic carcinoma (EAC) cells. The day after inoculation, the treatment regimen included feeding mice daily with the different MRET activated water fractions (15, 30, 45, 60, old water).

Control group (also referred to as Water Fraction 11), included 20 mice that were fed nonactivated water for up to fourteen days prior to inoculation. Mice where then inoculated intraperitoneally with 200,000 Ehrlich ascitic carcinoma (EAC) cells. After inoculation the mice were again fed nonactivated water daily.

The first stage was performed on day 8 after tumor cell inoculation for each group (prophylactic, therapeutic, control), where 10 mice from each treatment regimen were sacrificed and ascitic fluids containing tumor cells were obtained from peritoneal cavities. During the second stage, the remaining 10 mice from each treatment continued post-inoculation treatment and were monitored for survival.

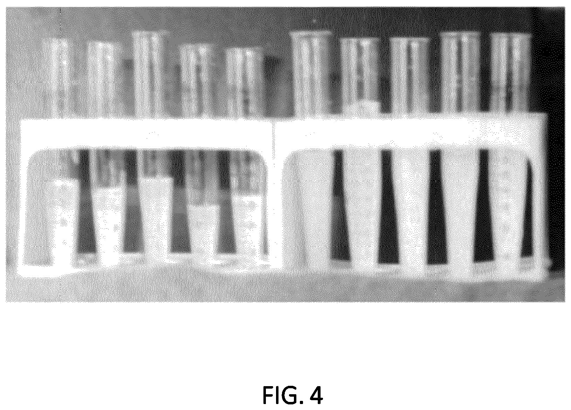

Exemplary results are depicted in FIG. 4, which shows that the volume of ascitic fluid obtained from peritoneal cavities of mice at day 8 after inoculation that underwent prophylactic treatment with water activated for 30 min (left 5 samples) was significantly less (about one-half) than the volume obtained from control (right 5 samples). Each tube contains ascitic fluid obtained from one mouse.

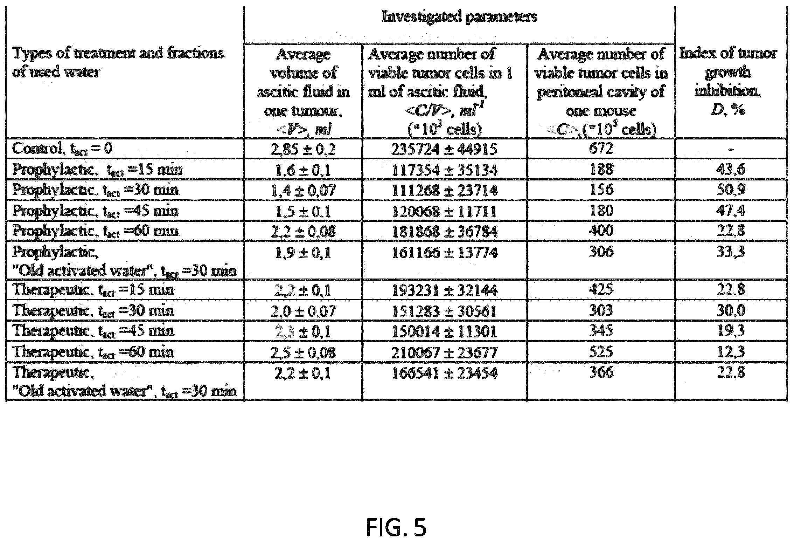

FIG. 5 provides a table comparing the efficacy of the different treatment regimens on the inhibition of tumor growth. As summarized in the table, average volume of ascitic fluid obtained per mouse (also referred to as one tumor) and average number of viable tumor cells per mL of ascitic fluid where measured to determine the average number of viable tumor cells in the peritoneal cavity of each mouse and thus to calculate percent of tumor growth inhibition. In summary, a positive antitumor effect was displayed by a decrease in both the volume of ascitic fluid in peritoneal cavity of tumor-bearing mice and the reduced content of viable tumor cells. Ascitic fluid volume was decreased approximately 2-fold in animals under the prophylactic regimen group (t act = 30 min) in comparison with control animals. Similar tendency and approximately the same efficacy were observed in other groups with prophylactic application of activated water (t act = 30, 15 and 45 min). In contrast the effect of activated water (t act = 60 min) on tumor growth in mice of group "prophylactic treatment" was significantly weak (average ascitic fluid volume of each mouse from this group was 2.2 ml compared to 2.85 in control - increasing by 23%).

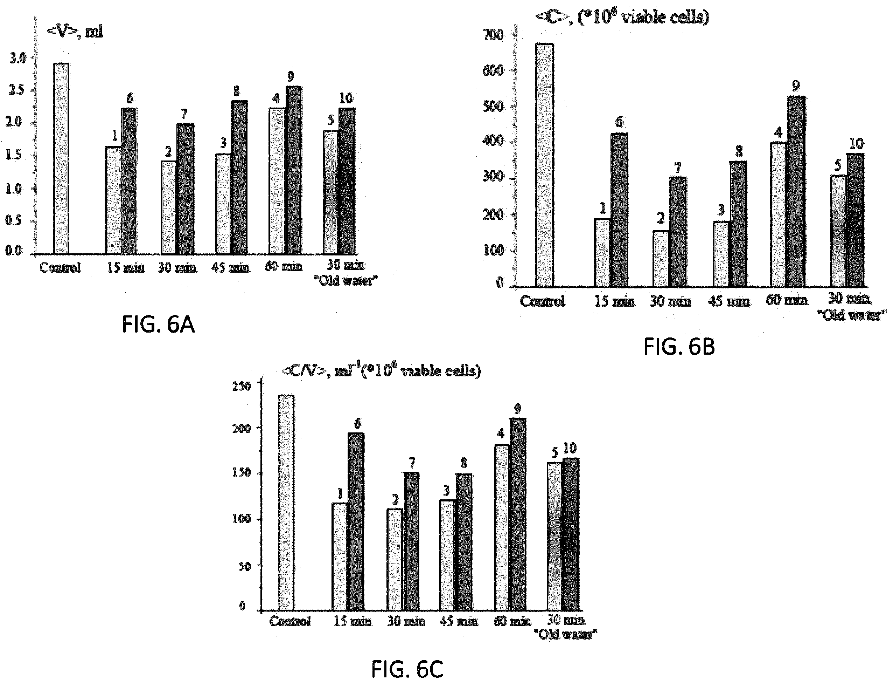

FIG. 6A is a graph grouping the average volume (V) of ascitic fluid obtained from control, prophylactic regimen (1-5), and the therapeutic regimen (6-10) according to water activation time. FIG. 6B is a graph grouping the average number of viable tumor cells (C) obtained from control, prophylactic regimen (1-5), and the therapeutic regimen (6-10) according to water activation time on day 8. Likewise, FIG. 6C is a graph grouping the average number of viable tumor cells per mL of ascitic fluid (C/V) obtained from control, prophylactic regimen (1-5), and the therapeutic regimen (6-10) according to water activation time on day 8. In all instances, activated water slowed tumor proliferation. The greatest slowing of tumor proliferation was found using the prophylactic treatment approach, which suggests the regular ingestion of activated liquids may slow or prevent tumor progression in subjects.

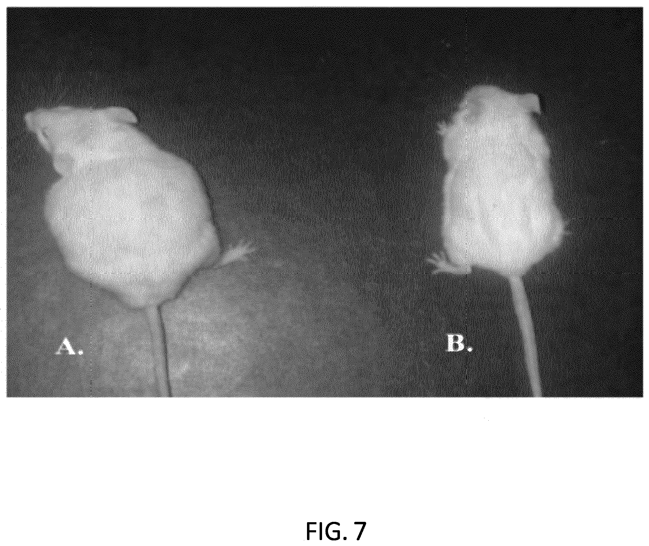

FIG. 7 is a photograph of exemplary mice on day 18 after EAC inoculation comparing (A) the control group and (B) the prophylactic treatment groups (t= 30 min). The photograph clearly shows the build up of ascitic fluid in the control.

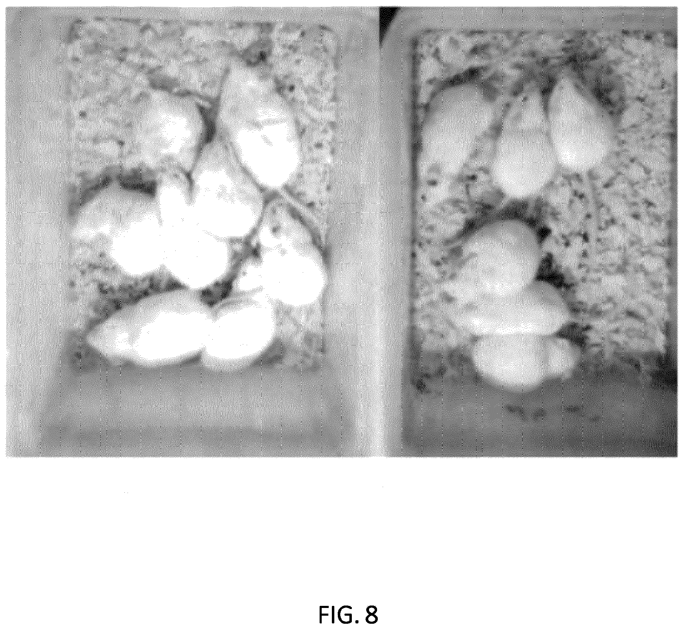

FIG. 8 is a photograph showing side by side the mice from prophylactic treatment groups that received water activated for 30 min. Mice treated with freshly activated water are placed on the left side of the photo, whereas mice that received "old activated water" - on the right side. Photo was making on the 19th day after mice were inoculated with cells of ascitic Ehrlich carcinoma.

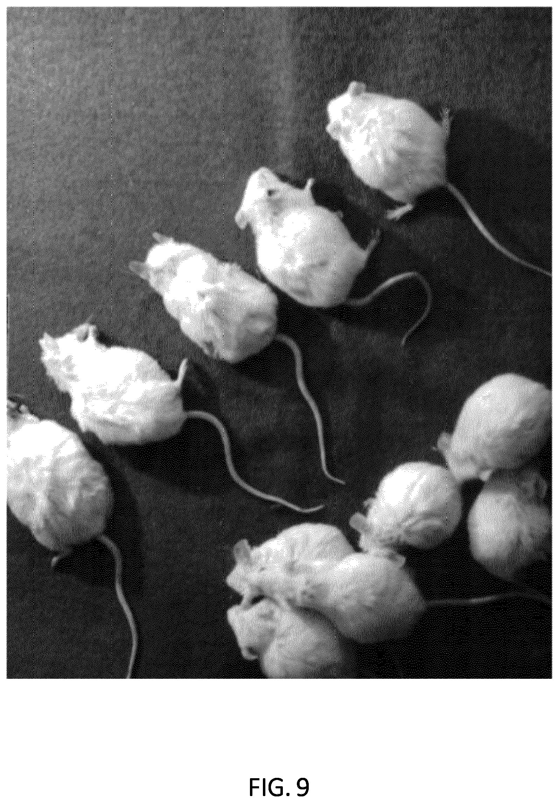

FIG. 9 is a photograph on day 21 after inoculation showing the EAC inoculation was lethal to the entire control group (left side), while some mice from the prophylactic treatment group (t= 45 min) survived. This again supports the regular ingestion of activated liquids to slow or prevent tumor progression in subjects.

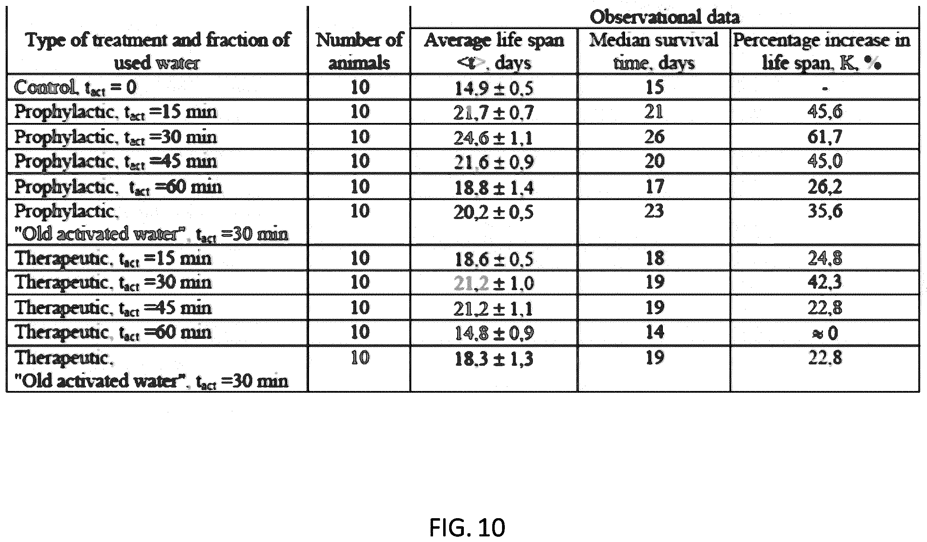

FIG. 10 is a table showing results, where an increase in the average lifespan (mean) and median lifespan within the prophylactic and therapeutic treatment groups was found compared to control. Also shown is the percentage increase in lifespan for each treatment group compared to control.

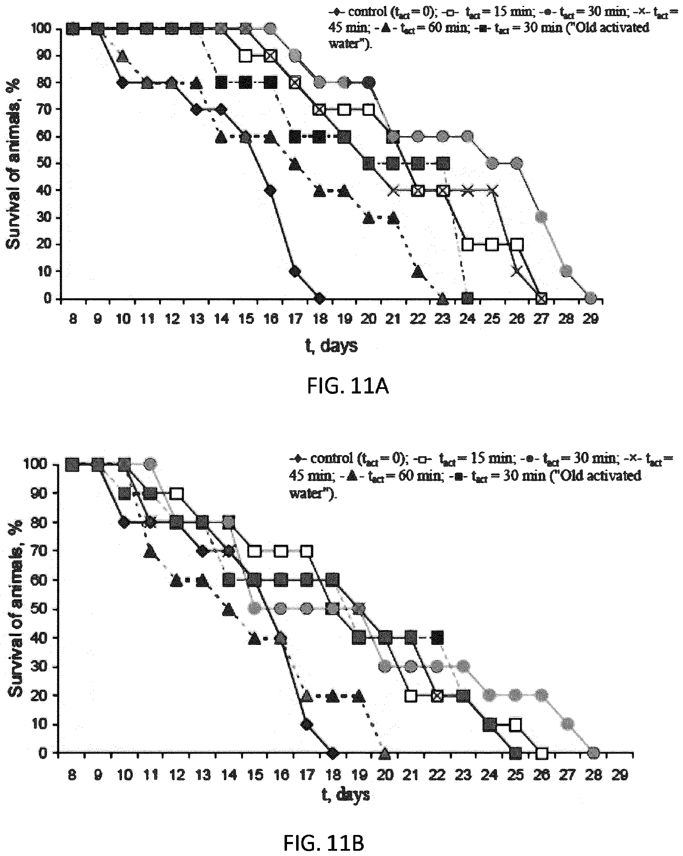

FIG. 11A is a graph showing the survival rate over time of mice under the prophylactic treatment regimen for each of t=15 min, t=30 min, t-45 min, t=60 min and t=30 min (old activated water) compared to control. Each group significantly outlived control.

**FIG. 11B** is a graph showing the survival rate over time of mice under the therapeutic treatment regimen for each of t=15 min, t=30 min, t=45 min, t=60 min and t=30 min (old activated water) compared to control. Each group significantly outlived control.

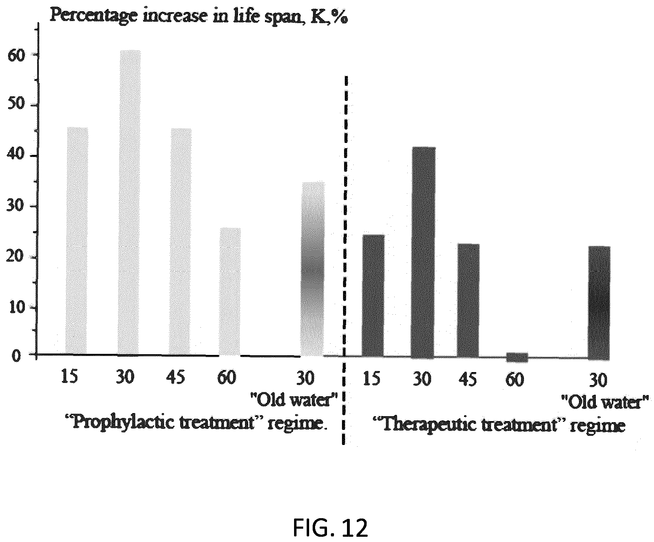

**FIG. 12** is a graph demonstrating the percentage increase in life span of each group of the prophylactic and therapeutically treated mice.

In summary, results show that activated water was able to substantially inhibit or reduce tumor growth in mice with transplanted ascitic Ehrlich carcinoma.

It is important to note that although long-term storage of activated water decreased its antitumor activity compared to freshly treated water under the same time (e.g. 30 min), it did not abrogate it. Thus, while activated long term water is useful as an antitumor substance, freshly treated water having an exposure time of 30 min showed the best results. For completeness, the tumor inhibition index of mice receiving "old activated water" (t act = 30 min) in the prophylactic treatment group was approximately 33.3%. It was substantially better as compared to mice from the prophylactic treatment group receiving freshly activated water, where activation was form 60 min. In the case of the latter, percentage increase in life span was 22.8%.

Results clearly show the potent effect of activated water on total tumor cell counts. In particular, total tumor cell counts in mice from the prophylactic treatment group which received water activated in the most optimal regimen (t act = 30 min) was 4.2-fold decreased compared to control mice.

Solely a therapeutic application of activated water was less effective than corresponding prophylactic treatment regimens. Solely therapeutic approaches resulted in tumor growth inhibition indices between about 12-30%; whereas, most prophylactic treatment regimens were well above 30 %, reaching over 40% to about 50%. Application of water activated during 30 min was the most effective.

It can also be concluded that the use of activated water has a substantial influence on the survival of tumor-bearing animals. When activated water was applied in "prophylactic treatment" regimens, the increase in life span was observed in all groups of mice. Water activated during 30 min had the most potent effect on survival. It has been shown that average survival time of mice which received water (t act = 30 min) in "prophylactic treatment" regimen increased to 61.7%. Very marked increase in life span (about 45%) was observed when mice were treated with activated water in "prophylactic treatment" regimen at t act = 15 min and t act = 45 min.

When mice received activated water in "therapeutic treatment" regimen, significant positive effects on increase in lifespan were also observed. However, values of estimated index were 30-50% lower than in "prophylactic treatment" regimens. It can be suggested that water activated during 60 min might not be effective under solely therapeutic applications.

Furthermore, application of such water aimed on tumor growth prophylaxis did not have any adverse effects that are typical for chemotherapy of cancer.

In another exemplary study, the prophylactic and therapeutic antitumor effects of different fractions of molecular resonance effect technology-activated water was tested on an ascitic sarcoma tumor model, which is a commonly used model for tumors with connective tissue histogenetic origin.

Five different fractions of activated water were prepared to elucidate antitumor effects of activated water depending on time of its activation. Four water fractions were obtained after water activation during 15, 30, 45 and 60 min. Also, a large volume of water was activated during 30 min and stored at 4.0° C about 45 days. This water also was used in the study. This fraction of activated water was named as "old activated water". Investigations with "old activated water" were aimed to research the influence of activated water "aging" on its antitumor and immunostimulatory effects *in vitro* and *in vivo.* Analogous control investigations using non-activated distilled water were carried out.

Inbred adult male BALB/c mice at 11 weeks of age, with 23 - 24 g corporal weight were used. BALB/c mice (genetic formula "bbcc", H-2 a is the major histocompatibility complex allele) are white mice which are very susceptible to various oncogenous viruses.

Similar to the above, 220 mice were assigned to either a prophylactic action group (100 mice), a therapeutic action group (100 mice), or a control group (20 mice).

The prophylactic action group was further split into 5 different prophylactic treatment regimens of 20 mice each (5*20=100). The prophylactic groups are also referred to as water fractions 1-5. The prophylactic treatment regimen included feeding mice daily with the different MRET activated water fractions (15, 30, 45, 60, old water) for up to fourteen days prior to inoculation. Mice where then inoculated intraperitoneally with 200,000 viable ascitic sarcoma tumor cells and the day after inoculation, the same feeding regimen continued for 8 days.

The therapeutic action group was further split into 5 different therapeutic treatment regimens of 20 mice each (5*20=100). The therapeutic groups are referred to as Water Fractions 6-10. The therapeutic treatment regimen included feeding all mice daily with non-activated water fractions for up to fourteen days prior to inoculation. Mice where then inoculated intraperitoneally with 200,000 viable ascitic sarcoma tumor cells. The day after inoculation, the treatment regimen included feeding mice daily with the different MRET activated water fractions (15, 30, 45, 60, old water).

Control group (also referred to as Water Fraction 11), included 20 mice that were fed nonactivated water for up to fourteen days prior to inoculation. Mice where then inoculated intraperitoneally with 200,000 viable ascitic sarcoma tumor cells. After inoculation the mice were again fed non-activated water daily.

The first stage was completed on the 8th day after tumor cell inoculation for each group (prophylactic, therapeutic, control), where 10 mice from each treatment regimen were sacrificed and ascitic fluids containing tumor cells were obtained from peritoneal cavities. During the second stage, the remaining 10 mice from each treatment continued post-inoculation treatment and were monitored for survival.

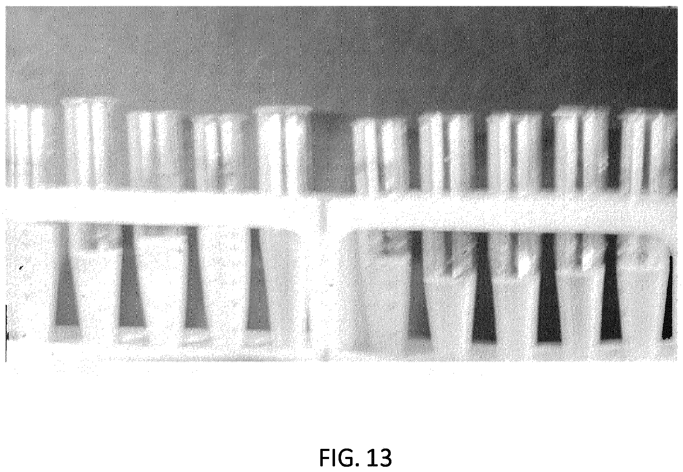

Exemplary results are depicted in **FIG. 13,** which shows the volume of ascitic fluid obtained from peritoneal cavities of mice at day 8 after inoculation that underwent prophylactic treatment with water activated for 45 min (right 5 samples) was significantly less than the volume obtained from control (left 5 samples).

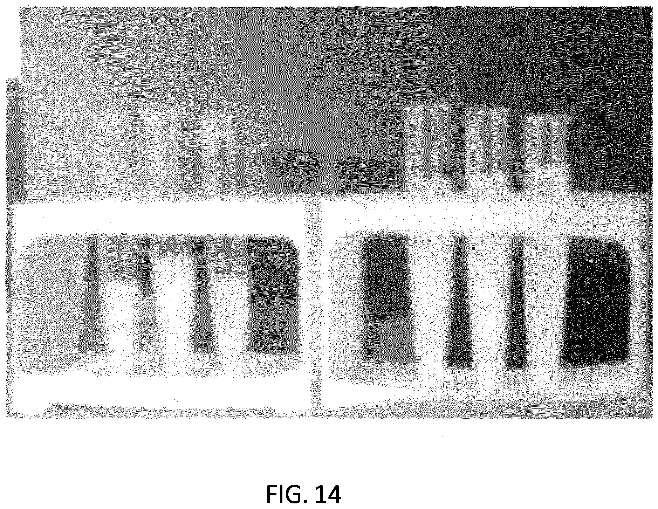

Additional results are shown in **FIG. 14,** which shows the volume of ascitic fluid obtained from peritoneal cavities of mice at day 8 after inoculation that underwent prophylactic treatment with water activated for 15 min (left 3 samples) was significantly less than the volume obtained from control (right 3 samples).

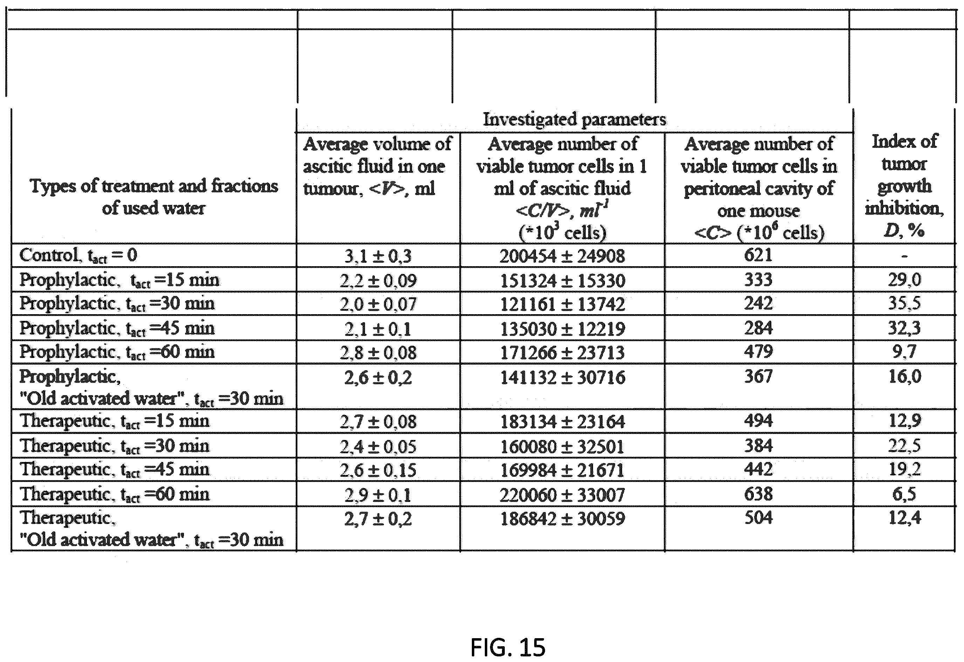

**FIG. 15** is a table comparing the efficacy of the different treatment regimens on inhibition of tumor growth. As summarized in the table, average volume of ascitic fluid obtained per mouse (also referred to as one tumor) and average number of viable tumor cells per mL of ascitic fluid where measured to determine the average number of viable tumor cells in the peritoneal cavity of each mouse and thus the percent of tumor growth inhibition.

In summary, treatment with activated water resulted in an inhibitory effect on the growth of transplanted sarcoma 37 tumor cells in mice; though, such effects were less marked compared to the Ehrlich ascitic carcinoma (EAC) model. In particular, treatment with activated water resulted in reduced volume of ascitic fluid from the peritoneal cavity and fewer tumor cells compared to control. Optimal results were achieved using water activated for 30 minutes under the prophylactic regimen, which inhibited tumor growth of sarcoma 37 by 35.5 %, which was surprising. For completeness, use of water activated for 15 and 45 min in the prophylactic regimen inhibited tumor growth 29% and 32 % respectively, which is similar to the results achieved when using water activated for 30 min in the prophylactic approach.

**FIG. 16A** is a graph grouping the average volume (V) of ascitic fluid obtained from control, prophylactic regimen (1-5), and the therapeutic regimen (6-10) according to water activation time. **FIG. 16B** is a graph grouping the average number of viable tumor cells (C) obtained from control, prophylactic regimen (1-5), and the therapeutic regimen (6-10) according to water activation time on day **8. FIG. 16C** is a graph grouping the average number of viable tumor cells per mL of ascitic fluid (C/V) obtained from control, prophylactic regimen (1-5), and the therapeutic regimen (6-10) according to water activation time on day 8.

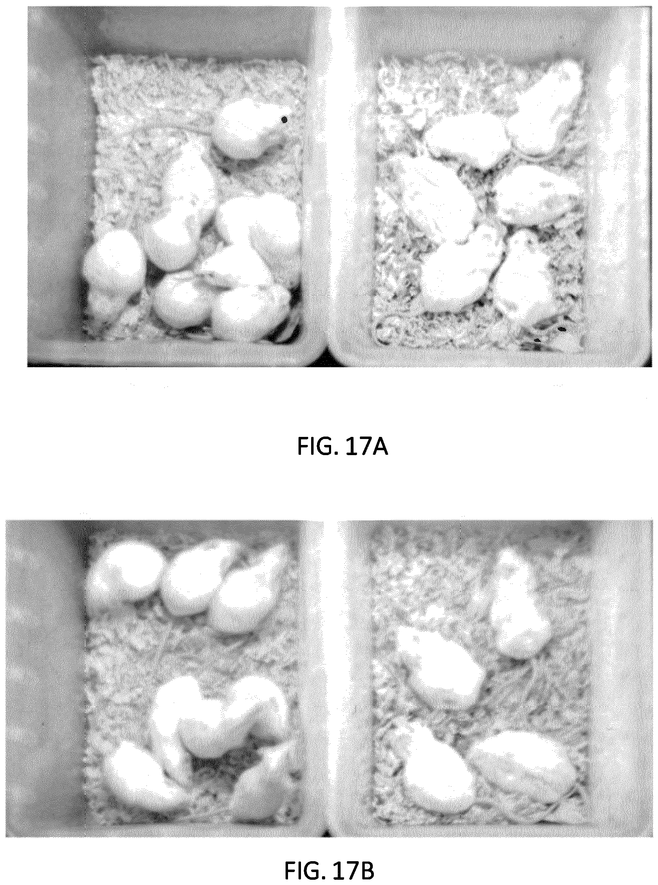

**FIG. 17A** is a photograph of mice on day 17 after inoculation with ascitic sarcoma 37 comparing the prophylactic treatment group (t= 15 min) on the left and the control group on the right. FIG. 17B is a photograph taken 20 days after tumor cell inoculation, showing side by side the mice from the prophylactic treatment group that received water activated for 15 min (left side) compared to mice from the therapeutic treatment group that also received water activated for 15 min.

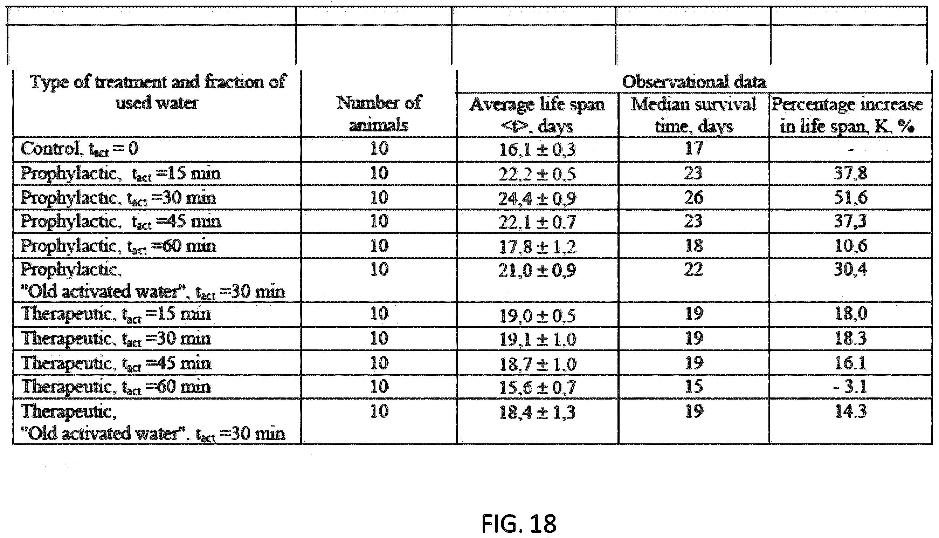

**FIG. 18** is a table showing the difference in the average lifespan (mean and median) within the prophylactic and therapeutic treatment groups compared to control. Also shown is the percentage change in lifespan for each treatment group compared to control. Overall, the "therapeutic treatment" regimen of activated water application was less effective than the "prophylactic treatment" regimen. In furtherance of this, water activated for 60 min under the therapeutic regimen resulted in an insignificant effect on lifespan.

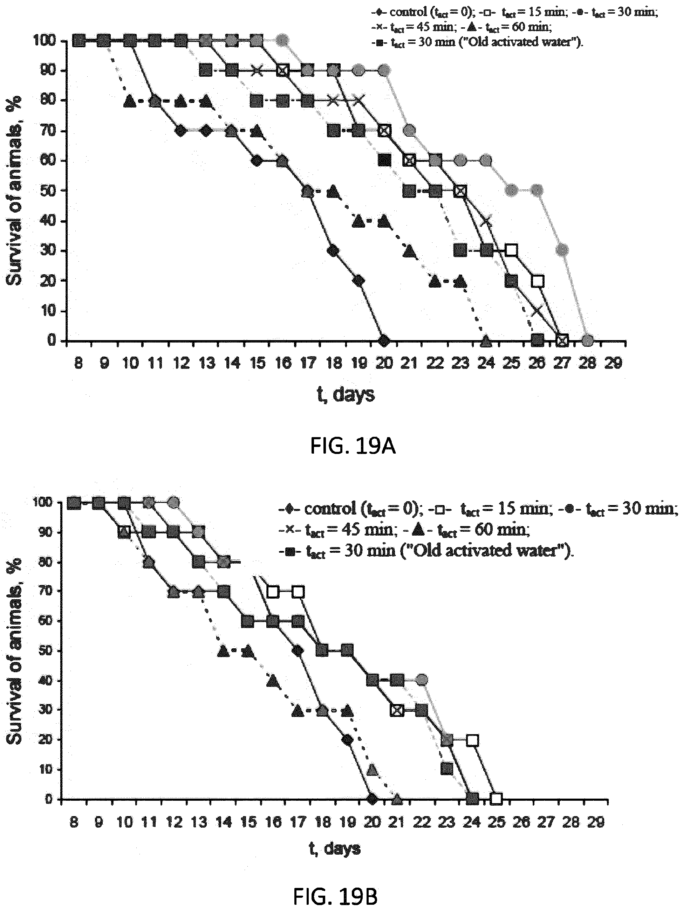

**FIG. 19A** is a graph showing the survival rate over time of mice under the prophylactic treatment regimen for each of t=15 min, t=30 min, t-45 min, t=60 min and t=30 min (old activated water) compared to control. All groups clearly outlived control.

**FIG. 19B** is a graph showing the survival rate over time of mice under the therapeutic treatment regimen for each of t=15 min, t=30 min, t=45 min, t=60 min and t=30 min (old activated water) compared to control. Though less impressive as the prophylactic treatment group, the therapeutic treatment group statistically outlived control.

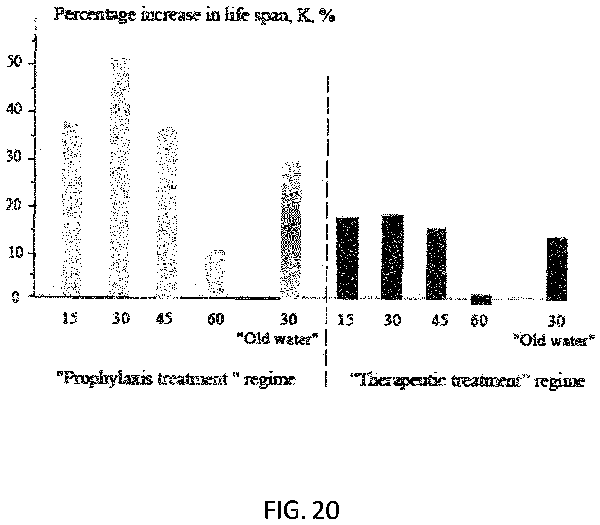

**FIG. 20** is a graph summarizing the percentage increase in life span of each group of the prophylactic and therapeutically treated mice for the different treatment regimens.

Like in the EAC model, use of activated water increased the lifespan of mice after transplanting sarcoma 37 tumor cells. Similar to the EAC model, the greatest increase in lifespan was observed when mice received water activated for 30 min in the "prophylactic treatment" regimen. The increase in lifespan was 51.6 %. When mice were treated with water activated during 15 and 45 min the increases in lifespan were quite similar, approximately 37-38 %.

Importantly, results show that tumor growth was reduced, and lifespan was extended, even when mice received "old activated water" (activation time was 30 minutes). Further, in each of the prophylactic and therapeutic regimens, increase in lifespan was about the same between the "old activated water" (at 30 min) and water activated for 45 min.

In conclusion it can be noted that prophylactic application of optimally activated water resulted in significant tumor growth inhibition within the sarcoma 37 model. Lifespan was increased over 50%. While the therapeutic treatment regimen also increased lifespan generally, it was less successful than the prophylactic approach. Furthermore, long-term storage of activated water did not cause significant decrease of antitumor efficacy and thus activated water that is stored long term can be used as a treatment or preventative approach against sarcoma and likely other cancers.

## EXAMPLE 2

## ENHANCED NK CELL KILLING OF TUMOR CELLS USING ACTIVATED WATER

Also disclosed is use of the activated water for enhancing NK cell killing of tumor cells. An exemplary method includes exposing NK cells to the activated water or liquid, where the water or liquid is activated by exposing the water or liquid to low frequency oscillations of 0.5 to 5.0 Hz from an activation assembly that simultaneously applies an alternating electric current at a frequency between 7.2 Hz to 8 Hz and applies light at a wavelength between 400 nm and 800 nm to a same polymer compositing that in response produces the low frequency oscillations; and exposing the NK cells to tumor cells.

The subject is preferably human but can also be used in veterinary medicine, such as for either domesticated or wild animals, including livestock.

Among the cancer cells that can be targeted by the NK cells are those found in breast cancer, prostate cancer, renal cancer, intestinal cancer, malignant gliomas, osteosarcoma, malignant melanoma, pancreatic cancer, malignant lymphomas and esophageal cancer.

In some embodiments, the cancer cell is a sarcoma. Examples of soft sarcomas that may be treated to reduce or inhibit cancer cell proliferation include angiosarcoma, fibrosarcoma, a gastrointestinal stromal tumor, Kaposi's sarcoma, liposarcoma, leiomyosarcoma, malignant fibrous histiocytoma, neurofibrosarcoma, rhabdomyosarcoma and synovial sarcoma. Bone sarcomas, such as osteosarcoma, Ewing's sarcoma, and chondrosarcoma can also be treated.

In support of the above, the prophylactic and therapeutic use of activated water is demonstrated with respect to improving NK cell cytotoxic activity against tumor cells.

In this example changes in cytotoxic activity of lymphocytes within mice treated with different fractions of molecular resonance effect technology-activated water, are demonstrated.

In order to understand the possible mechanism of antitumor effects of activated water the studies of changes in cytotoxic activity of lymphocytes of mice treated with different fractions of activated water were carried out. Natural killer (NK) cells are an important part of the immune system. Based on their defining function of spontaneous cytotoxicity without prior immunization, NK cells have been thought to play a critical role in immune surveillance and cancer therapy. NK cells that infiltrate tumors may protect against tumor spread. A second major role of NK cells is their productions of cytokines, which may be critically important to eliminate infections. Now active search and screening of substances with potent immunostimulatory activity are carried out.

Augmentation of NK cell activity caused by different modifying substances of natural origin has been a large interest with respect to correction of NK cell functional activity in various pathological states and neoplastic malignancies especially. Results of investing the effects of different activated water fractions on NK cell activity are presented below. The study was aimed to evaluate optimal regimens of water activation and regimen of activated water application for maximal stimulation of NK cell cytotoxic activity.

In summary, five different fractions of activated water were prepared to elucidate effectiveness of antitumor effects of activated water depending on time of its activation. Four water fractions were obtained after water activation during 15, 30, 45 and 60 min. Moreover, before beginning of investigations a large volume of water was activated during 30 min and stored at 4.0 C° for about 45 days. This water also was used in the study. This fraction of activated water was named as "old activated water". Investigations with "old activated water" were aimed to research the influence of activated water "aging" on its antitumor and immunostimulatory effects in vitro and in vivo. Analogous control investigations using non-activated distilled water were carried out.

Under the "prophylactic treatment" regimen, the five groups of mice (t=15 min, t=30 min, t=45 min, and t=60 min, "old water") were fed the activated water over 21 days. Under the "therapeutic treatment" regimen, five groups of mice were fed nonactivated water for 7 days then the different fractions of activated water (t=15 min, t=30 min, t=45 min, and t=60 min, "old water") for 14 days. Under the "control regimen" one group of mice was fed nonactivated water over the entire 21 days. Water activation was performed just prior to feeding in "fresh water" instances.

The lymphocyte fraction enriched with natural killer cells (NKC, NK cells) was isolated from spleens from all groups of mice. More specifically, splenocytes were obtained by the homogenization of spleens resected from mice in Potter's homogenizer to obtain single cell suspension and passed through a nylon mesh filter for clumps removal. Mononuclear lymphocytes were isolated by a standard Ficoll-Verografin technique. The final concentration of lymphocytes was $7.5 \times 10^6$ cells/ml. As a result, the lymphocyte fraction enriched with NK cells (about 25-30%) was obtained.

Ascitic Ehrlich carcinoma cells were isolated from peritoneal cavity of white mice at 8-9 weeks of age on the 8th day after tumor cell inoculation and were used in cytotoxic test as NK-resistant target cells (TC). Tumor cells were suspended in cultivation medium to concentration $2.5 \times 10^6$ cells/ml and their number and viability were determined in microscopical supravital test with trypan blue. Cell viability was about 98%.

All cytotoxicity tests were performed in 96-microwell round-bottomed plates using target - effector cell ratio of 1:3 in a total volume 200 µl/well. In controls, only TC and nutrient medium or TC and lymphocytes obtained from "control" group mice were added. In experimental wells 0.1 ml of TC and 0.1 ml of lymphocytes isolated from spleens of mice treated with different types of activated water were added.

Mononuclear lymphocytes obtained from each experimental mouse were placed into three wells of plate. So, effect of each fraction of activated water (and nonactivated control water too) on cytotoxic activity of NK cells was evaluated in 15 independent experiments and was considered as significant.

Similarly, 15 independent experiments were performed when only 0.1 ml of TC suspension and 0.1 mL of nutrient medium were added into one well. Those experiments allowed to determine the average "basal" number of dead tumor target cells $N_{tc}$ that could not be caused by cytotoxic influence of effector cells. The "basal" number of dead tumor target cells was "reference point" for evaluation of cytotoxic activity of NK cells obtained from mice after different types of activated water application.

After incubation at 37°C for 18 hours in humidified atmosphere with 5% $CO_2$, microplates were gently centrifuged ($400 \times g$, 5 min).

The numbers of viable and dead TC in control and experimental wells were determined using microscopical test with supravital staining with trypan blue.

Cytotoxic activity of NK cells was expressed as cytotoxicity index (CI, %) and was calculated as follows:

$$CI = [(N_{TC} - N_{TT+NK})/N_{TC}] \times 100\%$$

$N_{TC}$ = the number of viable tumor cells in wells with only TC (target cells); and
$N_{TC+NK}$ = the number of viable tumor cells in wells with TC and NK cells.

Based on this definition CI for "basal" experiments equal zero.

In addition to comparing the activity of lymphocytes obtained from mice treated with activated water the investigation of immunostimulatory action of reference chemical agent that belongs to phorbol ether family was also applied. Phorbol myristate acetate (PMA; chemical formula: 2-O-tetradecanoylphorbol-13-acetate) in concentration 50 ng/ml was used as standard stimulant of lymphoidmacrophage lines.

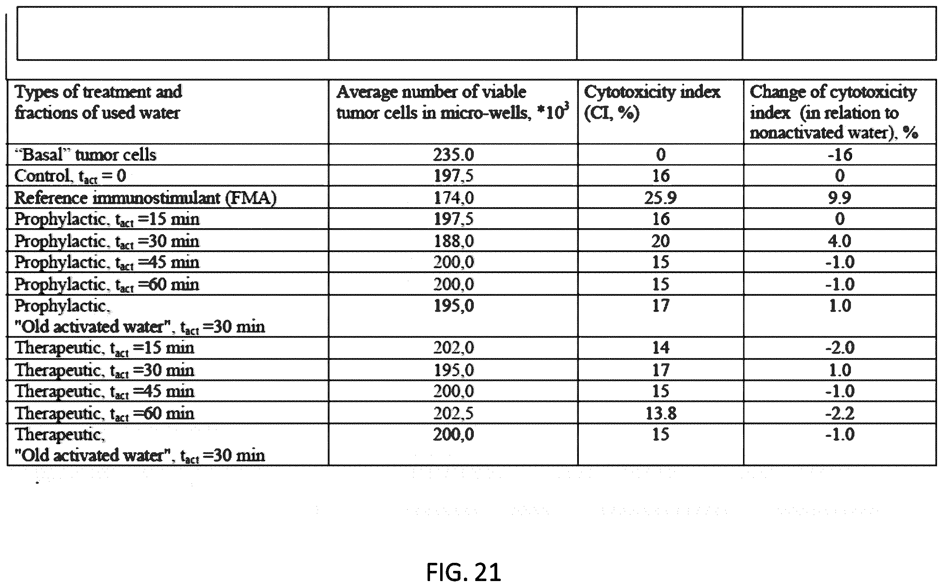

FIG. **21** summarizes the effects of activated water on cytotoxic activity of splenic mononuclear lymphocytes with NK-activity. In particular, the average number of viable tumor cells (TC) for each group as well as they cytotoxicity index (CI%) and change in cytotoxicity index (in relation to nonactivated water) as a percent is shown.

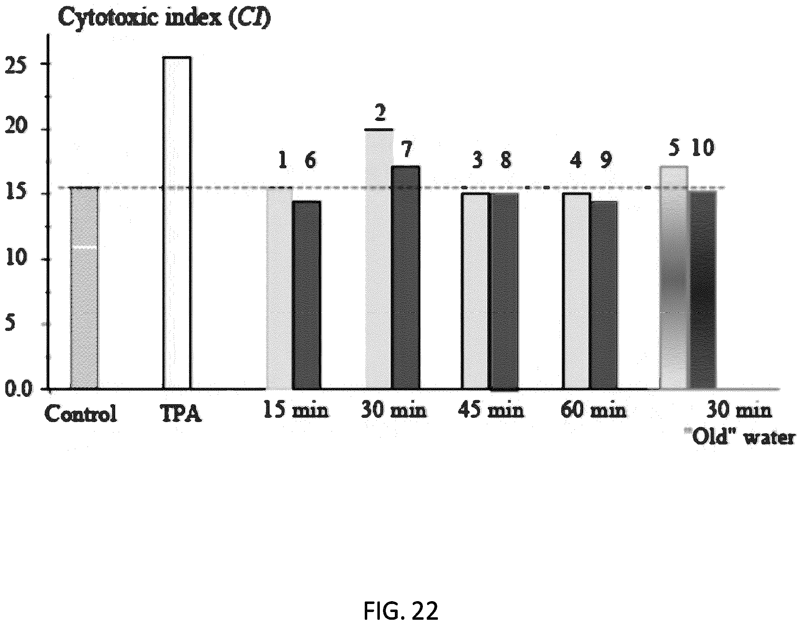

FIG. 22 is a graph summarizing the results of activated water feeding on cytotoxic activity of lymphocytes with natural killer cell activity. Both prophylactic (1-5) and therapeutic (6-10) regimens are shown compared to control. TPA was used as a reference stimulant of lymphoid cells.

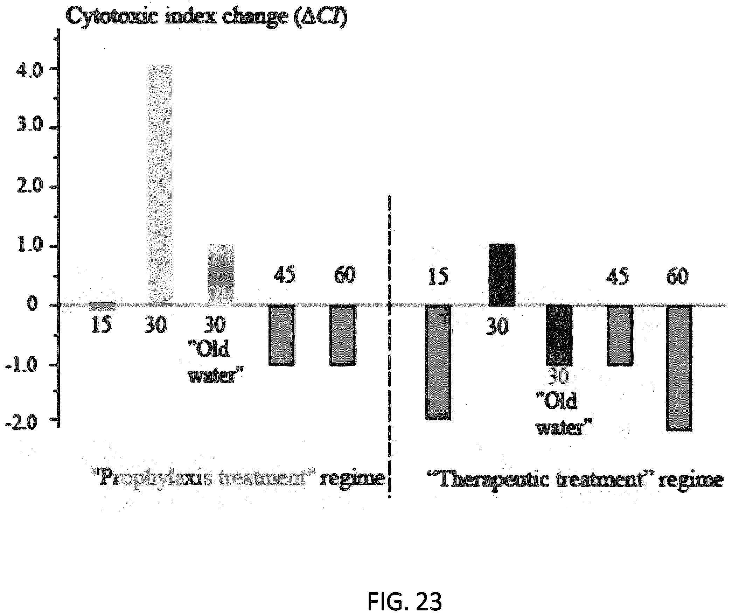

FIG. **23** is a graph summarizing results from the cytotoxic index change from FIG. 21 comparing cytotoxic activity of mononuclear lymphocytes from mice receiving different types of activated water in comparison to results of non-activated water application. The x-axis provides duration of water activation expressed in minutes for the prophylactic group and the therapeutic treatment groups. The greatest change was found in the prophylactic group, where water was activated for 30 minutes.

The results demonstrate that the immunostimulatory potential of activated water is dependent on both duration of activation and duration of storage of activated water before treatment of mice. Further, the results show that changes in cytotoxic activity of NK cells in mice was prolonged.

In particular, when water that was activated for 30 minutes was applied in a prophylactic regimen a significant increase in cytotoxic activity of lymphocytes was observed. Additionally, the application of this activated water in the prophylactic treatment regimen was shown to result in an increase of the cytotoxicity index by 20% as compared to control values. The control values were obtained by application of non-activated water.

The analysis of cytotoxic activity based on the duration of applying activated water showed the efficacy of the prophylactic application of the water was increased when the treatment period with activated water was prolonged or increased.

The therapeutic treatment regimen of activated water application, which had an activation time of 30 minutes, resulted in an insignificant increase of natural cytotoxicity levels. The group did not exceed 6%. Similar immunostimulatory effect of "prophylactic treatment" regimen of "old activate water" application, which had an activation time of 30 minutes, was observed. The data suggests that therapeutic application of water activated during 15 and 30 min resulted in modest potentiation of NK cell cytotoxic activity. However, prolonged feeding of 14 days ("therapeutic treatment" regimen) to 21 days ("prophylactic treatment" regimen) normalized the values of cytotoxicity index which were equal to control data. Application of other fractions of activated water did not cause statistically significant changes of NK cell cytotoxic activity.

Thus, significant increase of lymphocyte cytotoxicity levels was observed only when mice were treated with water activated for 30 minutes. It must be noted that immunostimulatory potential of activated water was less marked than the same observed after in vitro stimulation of lymphocytes with PMA. CI values of PMA-stimulated NK cells were increased in 62%, whereas activated water application resulted in only 20% of natural cytotoxicity potentiation. However, augmentation of NK cell activity caused by activated water application is quite promising approach for non-drug stimulation of immunity.

In conclusion, feeding activated water can induce significant activation of NK cell cytotoxic potential. In this scenario, it is apparent that application of activated water in tumor-bearing immunocompetent hosts would result in cytotoxic activation of NK cells to destroy tumor cells. Thus, these obtained results are important for therapeutic approaches involving activated water.

## EXAMPLE 3

## PREVENTION OF AMYLOID PLAQUES USING ACTIVATED WATER

Also disclosed is use of the activate water for preventing or reducing amyloid plaques. An exemplary method includes: providing a subject suffering from or at risk of suffering from the formation of amyloid plaques; activating water or liquid by exposing the water or liquid to low frequency oscillations of 0.5 to 5.0 Hz from an activation assembly that simultaneously applies an alternating electric current at a frequency between 7.2 Hz to 8 Hz and applies light at a wavelength between 400 nm and 800 nm to a polymer composition that in response produces the low frequency oscillations; and administering the activated water or liquid to the subject daily.

Amyloid is a general term for protein fragments that the body produces normally. Beta amyloid is a protein fragment snipped from an amyloid precursor protein (APP). In a healthy brain, these protein fragments are broken down and eliminated. Amyloid plaques are hard, insoluble accumulations of beta amyloid proteins that clump together between the nerve cells (neurons) in the brains of Alzheimer's disease patients.

The subject is preferably human but can also be used in veterinary medicine, such as for either domesticated or wild animals, including livestock. In some embodiments, the human is elderly, such as over the age of 65. In some embodiments, the human has or is at risk of developing Alzheimer's disease.

In support of the above, the activated water is demonstrated to increase brain matter and extend the lifespan in a transgenic amyloid animal model.

In this example the effects of activated water on the development of brain matter and mortality rate of mice is shown. Transgenic mice (TgCRND8-amyloid disease model) that were three weeks in age were fed either activated water or non-activated water for four months. In particular, 11 of the mice were given activated water and six were given non-activated water.

The activated water was generated using Millipore water and placing it in a range of the emittance of low frequency oscillations. The water was activated for 30 minutes then stored in sterile glass bottles. Non-activated water was untreated Millipore water that was filtered through a 0.2 micrometers (μm) filter.

The mice were provided both activated and non-activated water using conical tubes as water bottles. In the cases where wet feed was required, it was made in a plastic drug dose cup using both activated and non-activated water and a wooden stir stick. Both groups of water were restrained from interacting or contacting any metal.

After four months of providing animals either activated water or non-activated water, the animals were perfused with PBS during which the tail and brain were taken. Both the brain plaque density and mortality rates of the mice were recorded.

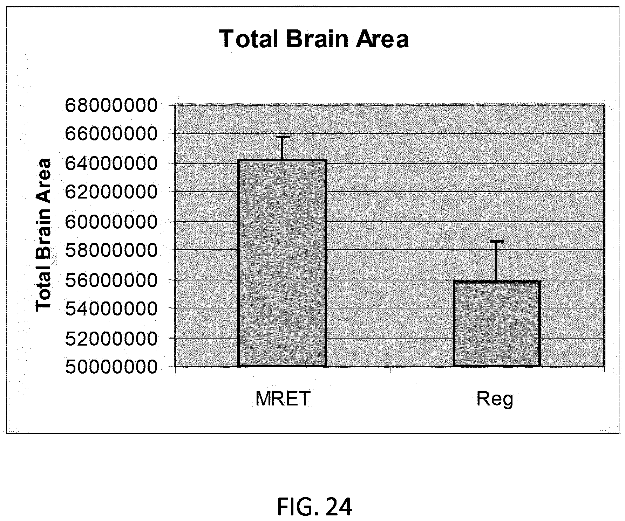

One hemisphere of each brain was post fixed, serially sectioned, stained for amyloid plaques (Amyloid monoclonal antibody as previously described; Janus et al., 2000, McLaurin et al., 2002) and number of plaques were counted visually. Plaque density and area covered by the brain were similar to observations as previously described (Janus et al., 2000, McLaurin et al., 2002). The plaques were not counted in the brains of dead animals in either group. Nor was dead animal data used for statistical calculations. Half of the brains were placed at -80°C to allow further investigation. The mean value of total brain area for mice on activated water was by 15% higher comparing with the mean value of total brain area for mice on non-activated water. **FIG. 24** provides a chart demonstrating this data.

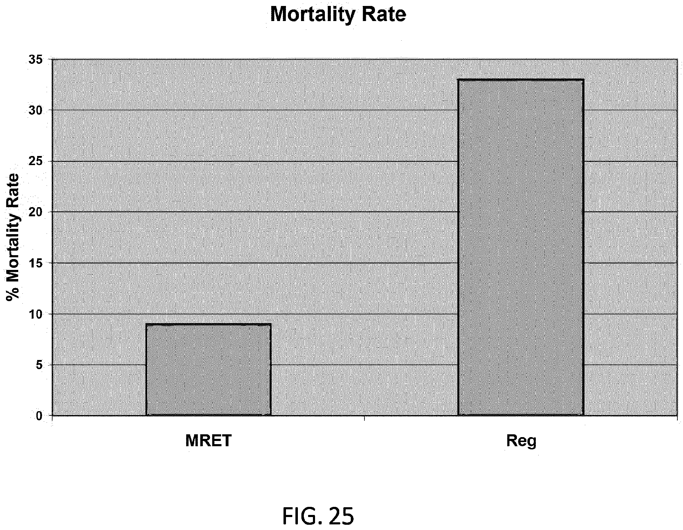

The typical mortality rate for the transgenic amyloid mice model is 25-40%. During the course of the investigation, the mortality rate of the activated water group was limited to 9% and the mortality rate of the non-activated water group was 33%. **FIG. 25** provides a chart demonstrating this data.

## EXAMPLE 4

## PREVENTION OF SKIN DISORDERS USING ACTIVATED WATER

Also disclosed is use of the activated water for preventing or ameliorating effects of a skin disorder. An exemplary method includes: providing a subject suffering from or at risk of suffering from the skin disorder; activating water or liquid by exposing the water or liquid to low frequency oscillations of 0.5 to 5.0 Hz from an activation assembly that simultaneously applies an alternating electric current at a frequency between 7.2 Hz to 8 Hz and applies light at a wavelength between 400 nm and 800 nm to a polymer composition that in response produces the low frequency oscillations; and administering the activated water or liquid to the subject daily. Examples include but are not limited to psoriasis, skin lesions, acne, atopic dermatitis, and ichthyosis.

The subject is preferably human but can also be used in veterinary medicine, such as for either domesticated or wild animals, including livestock. The compositions may be in the form of lotions, creams, ointments and gels, and also in the form of sprayable aerosols. Preferred formulations of the compositions according to the invention are creams, which may further contain saturated or unsaturated fatty acids such as stearic acid, palmitic acid, oleic acid, palmito-oleic acid, cetyl or oleyl alcohols, stearic acid being particularly preferred. Creams of the invention may also contain a non-ionic surfactant, typically polyoxy-40-stearate. In some embodiments, the activated water or liquid may be administered topically.

In support of the above, activated media is demonstrated to inhibit growth of callus cells, which provides a model for psoriasis. Callus tissue formation was carried out on segments of stalk from *Solanum rickii* in sterile cultural medium. Callus cells are mutated cells of botanical origin with the ability to produce uncontrolled, unlimited growth in nutrient medium. Accordingly, sterile agar-like cultural Murashige-Skoog medium with initiators for accelerating cell-like divisions of plants were added to the stalk segments. Media was either not activated (control), activated for 30 minutes, or activated for 60 minutes. Callus growth was monitored visually and ultimately by weighing.

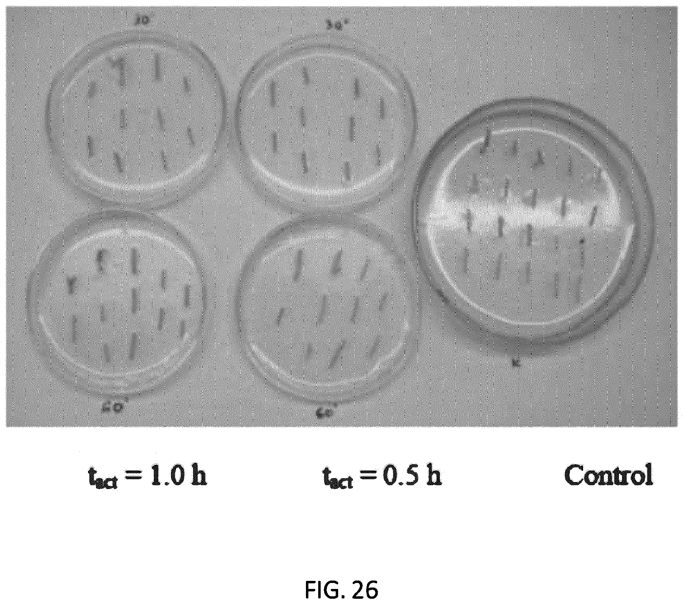

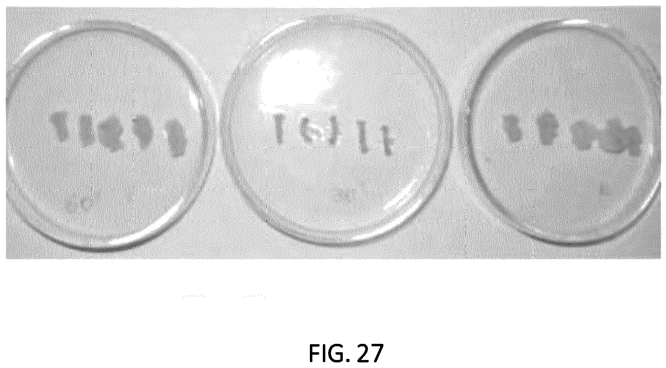

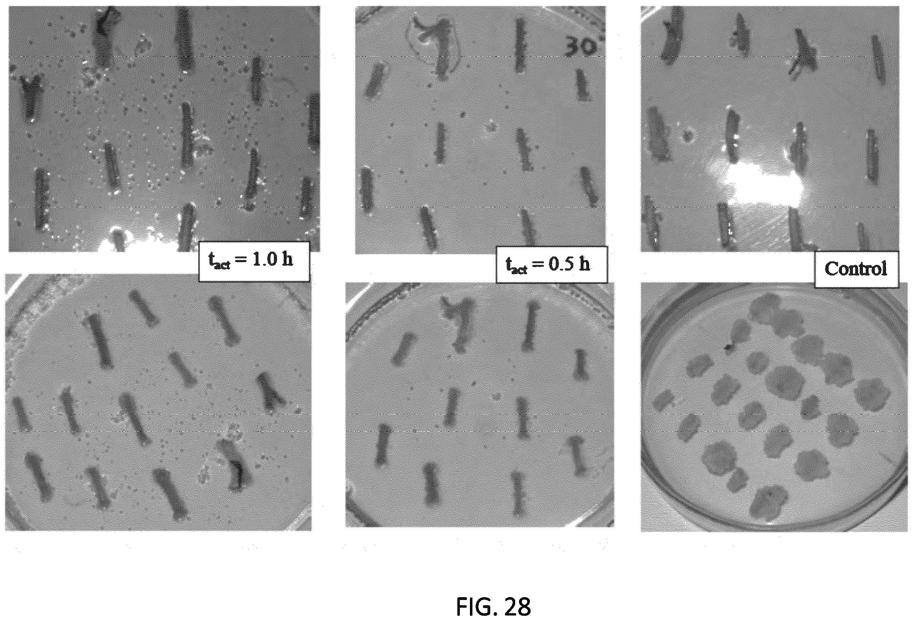

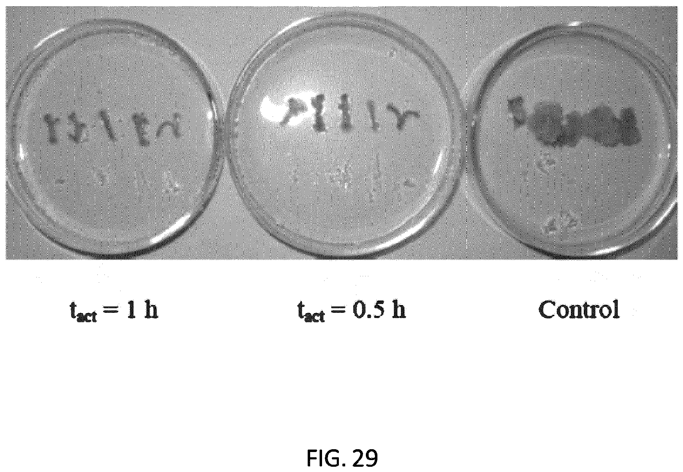

Media activated for 30 minutes inhibited callus cell growth at a rate of 15 times compared with a control sample. Media activated for 60 minutes inhibited callus cell growth at a rate of 1.4 times compared to control. This demonstrates that a very strong suppression of callus cell growth when treated with water activation for 30 minutes. This also demonstrates that with a high probability that activated water is an effective agent for treatment of psoriasis and other diseases. **FIG. 26** and **FIG. 27** are photographs showing the first experiment, where **FIG. 26** shows the callus cells prior to beginning the experiment and **FIG. 27** shows results at a later time. The experiment was repeated and confirming results are shown in **FIG. 28** and **FIG. 29.**

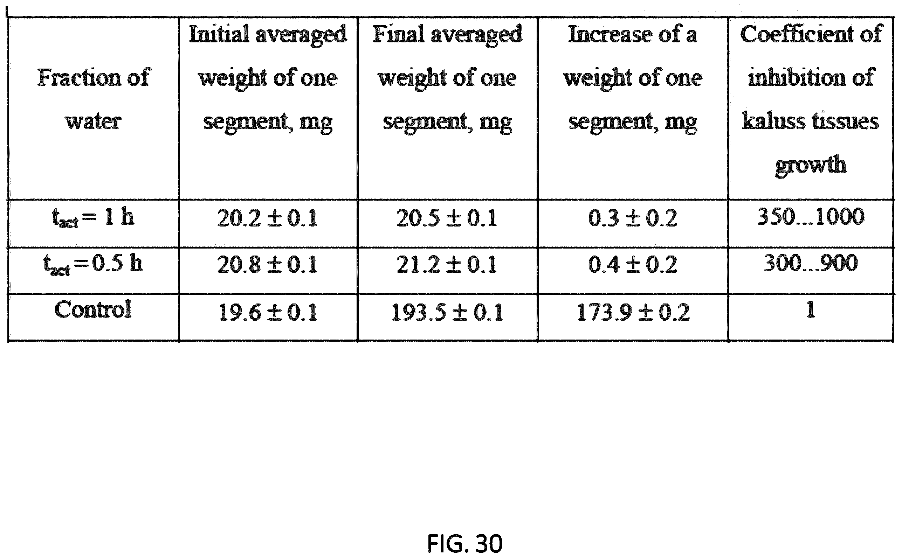

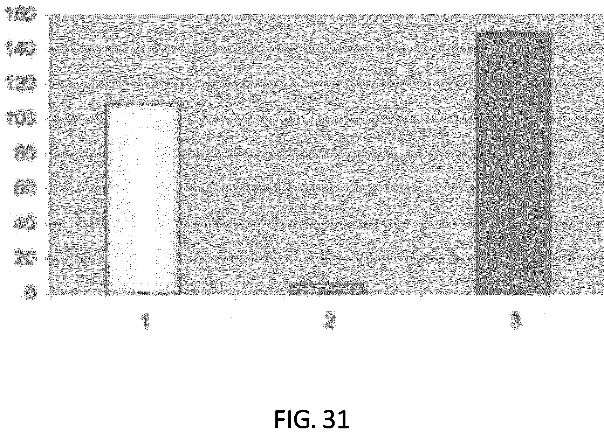

**FIG. 30** provides the initial average weight of one segment (in mg) before and after culturing in the presence of activated media (t= 30 min, t=60 min) compared to control. Also shown is the corresponding increase in weight and the coefficient of inhibition of callus tissue growth for each group. **FIG. 31,** column 1 represents the average increase of single segment weight of tissue in milligrams when placed in an activated medium for 60 minutes with a dilution ratio of 1:2.5. Column 2 represents the average increase of single segment weight of tissue in milligrams when placed in an activated medium for 30 minutes with a dilution ratio of 1:2.5. Column 3 of represents the average increase of single segment weight of tissue in milligrams when placed in a control sample such as distilled water.

In summary, strong growth inhibition of callus cells (*Solanum rickii*) was observed in activated media. Since the callus cell model data shows inhibition of callus cell growth, it is also expected that activated water can be used as a treatment for psoriasis.

## EXAMPLE 5

## INHIBITING MICROBIAL GROWTH USING ACTIVATED WATER

Also disclosed is a method of reducing or inhibiting microbial growth, the method comprising applying to a surface at risk of microbial growth, a composition comprising activated water or activated liquid, wherein the activated water or liquid is produced by exposing the water or liquid to low frequency oscillations of 0.5 to 5.0 Hz from an activation assembly that simultaneously applies an alternating electric current at a frequency between 7.2 Hz to 8 Hz and applies light at a wavelength between 400 nm and 800 nm to a polymer composition that in response produces the low frequency oscillations.

The activated water or liquid can be used in either bactericidal (those that kill bacteria) or in bacteriostatic (those that inhibit growth of cells). The water or liquid can be delivered in any suitable form such as liquid, gel, spray and thus may be formulated according to required or desired characteristics such as viscosity for intended application.

In support of the above, activated media is shown to have a significant effect on the growth of *Escherichia coli* (*E. coli*) in a beef-extract agar in an aerobic environment. During the investigation, the growth effect on *E. coli* bacteria was observed over 25 hours.

Two samples of water-based agar medium were activated consistent using of low frequency oscillations for 30 minutes and 60 minutes. The activated water was kept in a sterile environment for 24 hours. Afterwards, the *E. coli* bacteria was introduced to one sample of nonactivated water and two samples of activated water. Visual growth of *E. coli* bacteria began on the 17th hour of investigation.

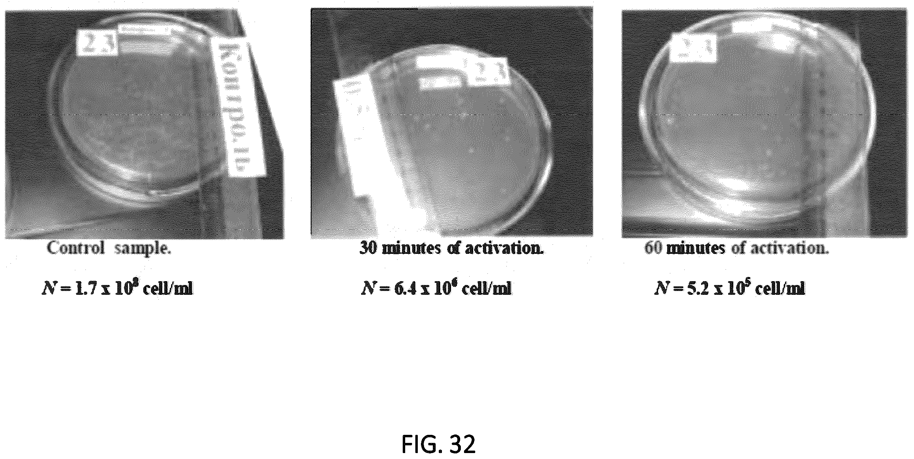

**FIG. 32** provides photographs showing results on the 23rd hour of the investigation. These photographs show a significant inhibition of the growth of *E. coli* in the activated water samples as compared to the nonactivated water.

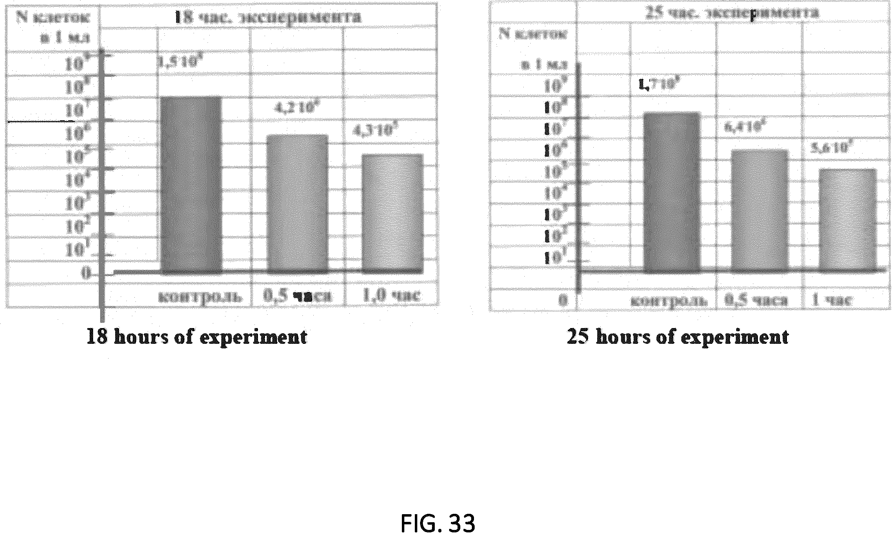

**FIG. 33** provides a summary graph showing results after 18 hours and 25 hours of investigation. The left columns of each chart represent the control sample. The middle columns of each chart represent the results from 30 minutes of water activation. The far-right column of each chart represents results from 60 minutes of water activation.

The data shows activation of water-based media has suppressed growth of *E. coli* bacteria at rates varying from 30 to 300 times. The inhibition of *E. coli* growth is more effective when activation time is increased. Water activated at an optimum regimen completely suppresses the growth of culture Escherichia coli in an aerobic environment.

As such, the activation of water using emit low frequency oscillations and other forms of molecular resonance effect technology provide a strong inhibition effect on bacteria growth.

## EXAMPLE 6

## IMPROVING ANTIBIOTIC EFFECTS WITH ACTIVATED WATER

Also disclosed is a method of enhancing the effects of an antibiotic. An exemplary method includes providing a surface at risk of microbial growth; and administering to the surface, an antibiotic in combination with activated water or an activated liquid. The activated water or activated liquid is produced by exposing the water or liquid to low frequency oscillations of 0.5 to 5.0 Hz from an activation assembly that simultaneously applies an alternating electric current at a frequency between 7.2 Hz to 8 Hz and applies light at a wavelength between 400 nm and 800 nm to a polymer composition that in response produces the low frequency oscillations.

Exemplary combinations can be used in the packaging industry, food processing industry and anywhere at risk of microbial growth. Formulations can be used in medical and research laboratories. Formulations can be generated by activating the water or liquid then combining or coapplying the antibiotic. Exemplary antibiotics that can include Clindamycin, Kanamycin, Cephalexin, Cephtriaxon, Levomiticin, Ciphran, Ampicillin, Tetracykline, Cephaclor, and Karbenicyline.

In support of the above, activated media is demonstrated for its enhancing effect on antibiotics. In particular, effects of 10 different antibiotics on *E. coli* in activated water is shown.

Beef extract agar was formed using water activated for 30 minutes (0.5hr), 60 minutes (1 hr) or distilled water without activation as control (K). The following antibiotics were then plated (1) Clindamycin, (2) Kanamycin, (3) Cephalexin, (4) Cephtriaxon, (5) Levomiticin, (6) Ciphran, (7) Ampicillin, (8) Tetracykline, (9) Cephaclor, (10) Karbenicyline. The resistance to the effect of antibiotics (RA) was determined by the size (diameter) of the area of inhibition of bacteria growth.

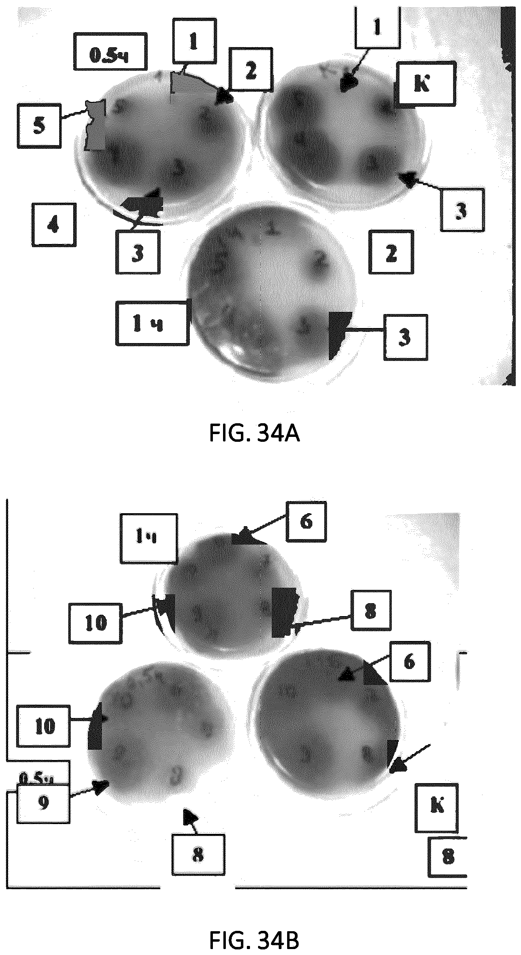

FIGS. 34A and 34B show the 16th hour of the investigation of this example. The maximal resistance to the effect of antibiotics was observed for 30 minutes activated samples. The minimal resistance to the effect of antibiotics was observed for 60 minutes activated samples.

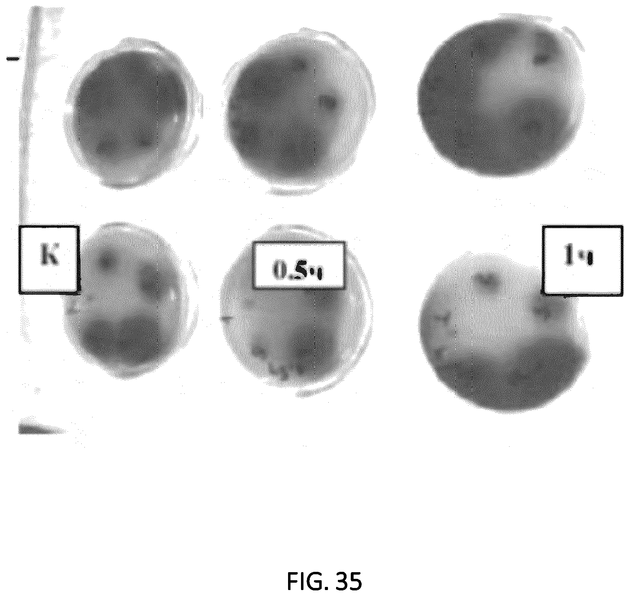

FIG. 35 shows results after hour 24 of experimentation. The areas of the inhibition of bacteria growth significantly decreased by the end of this experiment. The maximal resistance to the effect of all antibiotics (the smallest diameter of area) was observed for 30 minutes activated samples. The minimal resistance to the effect of all antibiotics was observed for 60 minutes activated samples.

It was shown that both amplification of efficiency of activity of some antibiotics in 2-3 times on growth of microbiological culture and impairment of this activity in 2-10 times takes place. This effect depends on the duration of water activation. The directedness of change of activity of antibiotics and value of this change is different for different antibiotics.

The influence of activated water on the metabolic activity of microorganisms was assessed under both aerobic and anaerobic environments. Metabolic activity of *E. coli* in the presence of activated water was assessed by measuring the reducing activity of *E. coli* in distilled water (control), and water activated for 30 minutes or 60 minutes.

Resazurin reduction assays measure some aspect of general metabolism and act as a marker of viable cells. The assay includes incubating a reagent with a population of viable cells, which converts the substrate to a colored or fluorescent product that can be detected. Under most standard culture conditions, incubating of the substrate with viable cells will result in a signal that is proportional to the number of viable cells present. When cells die, they rapidly lose the ability to convert the substrate to product. In this instance, incubation was in the presence of distilled water (control), and water activated for 30 minutes or 60 minutes under both anaerobic and aerobic environments.

In regard to anaerobic environments, water activated for 30 minutes provided a significant increase in the reducing and enzyme activity of the *E. coli.* More specifically, incubation with water activated for 30 minutes led to maximum reducing and enzyme activity (color transparent 100%); incubation in water activated for 60 minutes led significant reducing and enzyme activity (80% transparent and 20% colored); and incubation in distilled water that was not activated resulted in no reducing and enzymatic activity (100% colored).

In regard to aerobic environments, the reducing activity of *E. coli* was significantly inhibited.

## EXAMPLE 7

**PROTECTING CELLS AGAINST RADIATION USING ACTIVATED WATER**

Also disclosed is a method of protecting cells from damage from exposure to radiation. In support, the effects of activated water on human peripheral blood mononuclear cells (PMBC) and human astrocyte cells is demonstrated.

In this example, astrocytes are thawed, plated onto poly-lysine coated flasks and cultured for several days prior to seeding in flasks for irradiation. On the day before irradiation, cells were seeded in three poly-lysine T-25 coated flasks. PMBCs were thawed and plated directly into three T-25 flasks 24 hours prior to irradiation. Then three flasks of astrocytes and three flasks of PBMCs were irradiated. One flask from each cell type received no irradiation, one flask from each cell type received a radiation dose 2 Gy, and one flask from each cell type received a dose of 8 Gy. Cells were irradiated in a Gammacell model 40 extractor (MDS Nordion Gammacell).

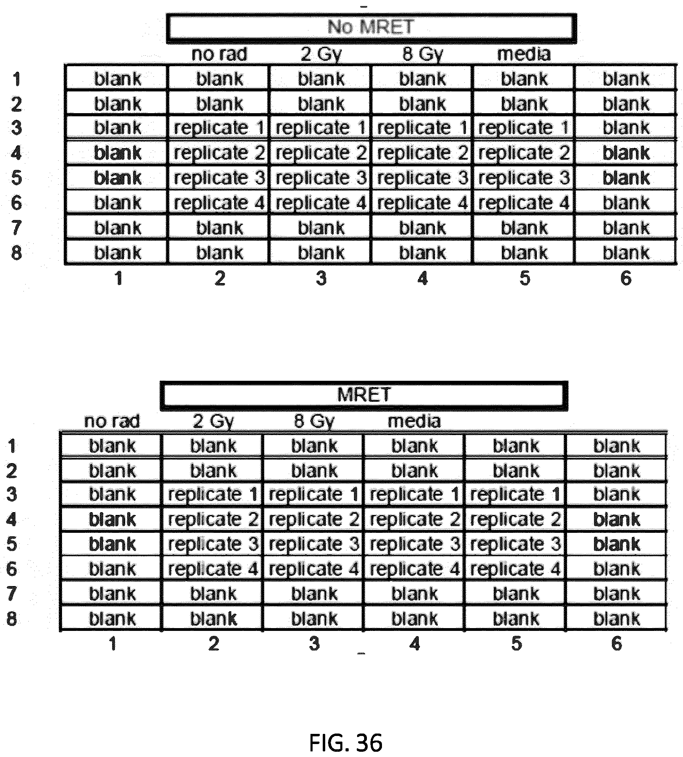

Following irradiation, the cells from each flask were harvested, split in half, and resuspended in either normal untreated media (No MRET) or activated media (MRET). The cells were counted and plated at a density of 5,000 cells/well. The astrocyte cells were plated in poly-lysine coated 96 well plates while the PBMCs were plated into normal tissue culture treated 96 well plates. Each cell line was plate according to the plate map (FIG. 36).

An MTT assay was performed at 24 hours and 72 hours using Cell Titer 96 Aqueous reagent (Promega) according to the manufacturer's recommendation. Half of the plates were assayed according to an MTT assay at 24 hours post-irradiation and the remaining half were assayed at 72 hours post irradiation. Plates were read on a 96 well plate reader (Molecular Devices Vmax kinetic microplate reader, molecular Devices LLC) at various time-points after addition of the MTT reagent. After collection of the study data, optical densities were plotted as a function of radioactive dose response curve for each cell line. Average OD values for replicate wells of each dose/treatment were plotted along with standard deviations. For each cell line, plates were read multiple times after addition of the MTT reagent. Optimal signals for the astrocytes were obtained after two hours of incubation.

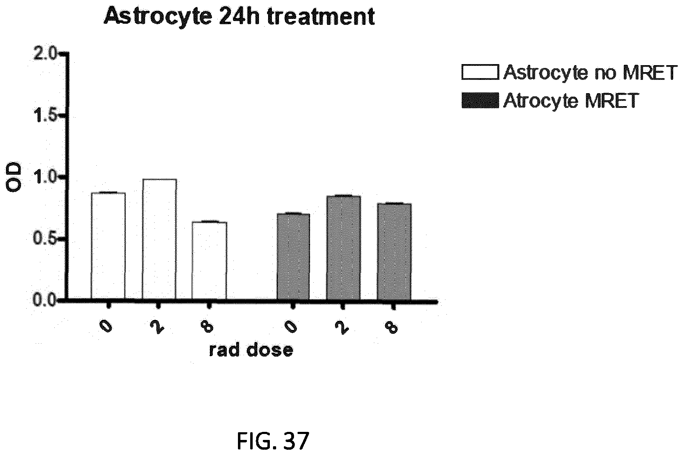

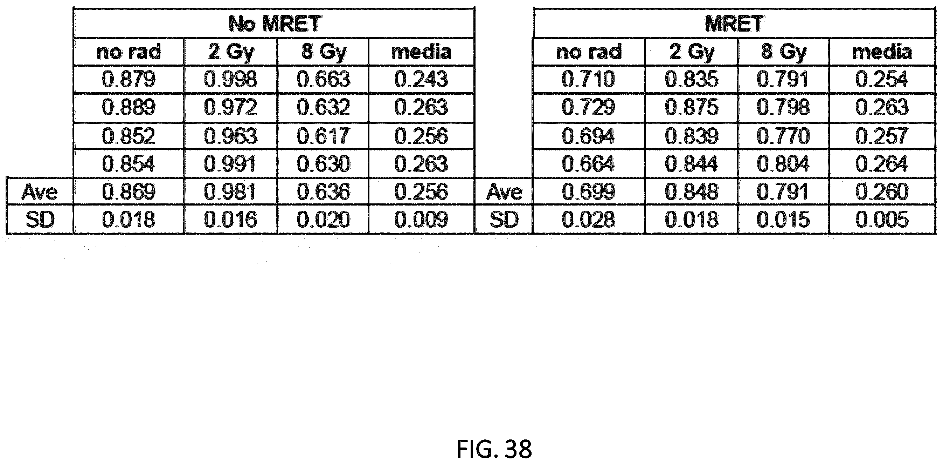

FIG. 37 is a graph showing the effect of "activated" media (MRET) on astrocytes compared to control after 24 hrs. The average values of quadruplicate wells are plotted. Error bars represent standard deviations. **FIG. 38** is a table showing the corresponding average values and standard deviation of quadruplicate wells.

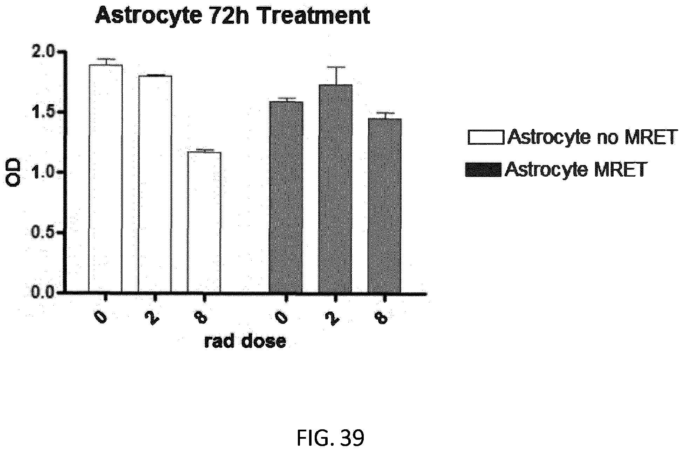

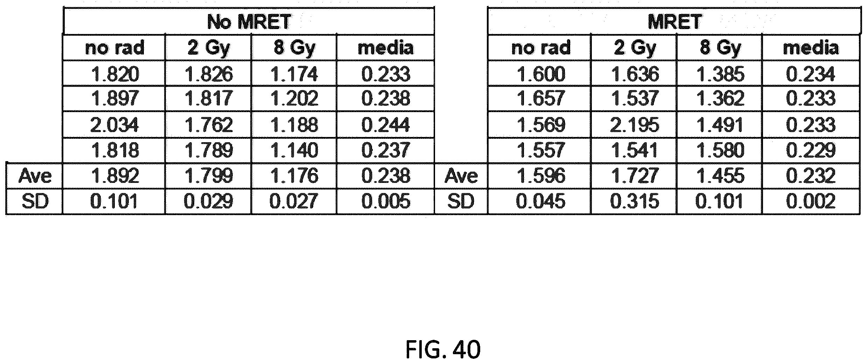

**FIG. 39** is a graph showing the effect of "activated" media (MRET) on astrocytes compared to control (no MRET) after 72 hrs. The average values of quadruplicate wells are plotted. Error bars represent standard deviations. **FIG. 40** is a table showing the corresponding average values and standard deviation of quadruplicate wells.

For the astrocytes treated with normal media, little change in the MTT signal was observed in the 2 Gy treated wells compared to the untreated cells at both 24 and 72 hours post irradiation. However, the 8 Gy radiation dose resulted in a 27% and 38% drop in MTT signal at 24 hours and 72 hours respectively compared to the cells that received no radiation. When treated with MRET, little to no loss in MTT signal was observed in the 8 Gy treated wells at both 24 hour and 72 hours (13% increase and 9% decrease respectively). Thus, the MRET treatment appears to protect the astrocytes against radiation induced damage.

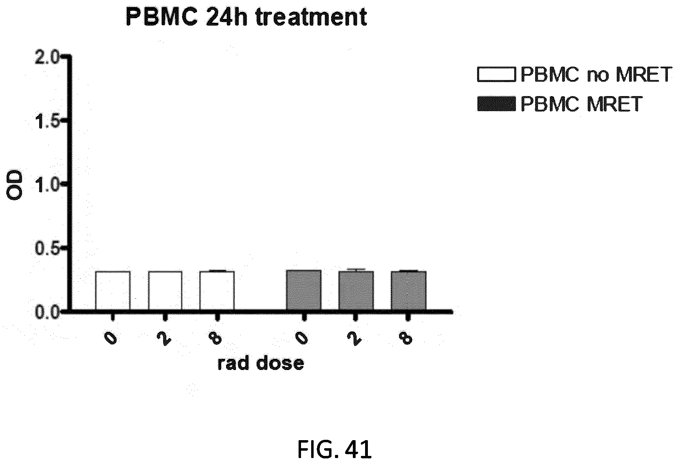

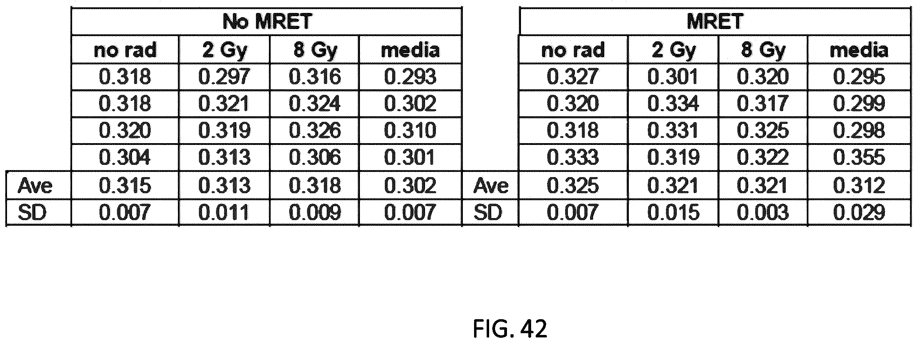

**FIG. 41** is a graph showing the effect of activated media (MRET) on PBMCs compared to control (no MRET) after 24 hrs. The average values of quadruplicate wells are plotted. Error bars represent standard deviations. **FIG. 42** is a table showing the corresponding average values and standard deviation of quadruplicate wells.

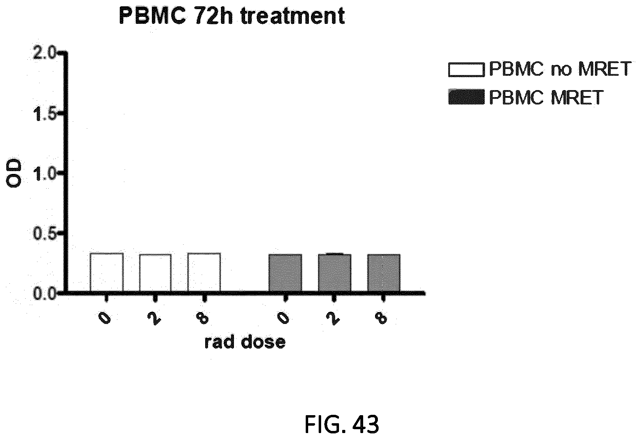

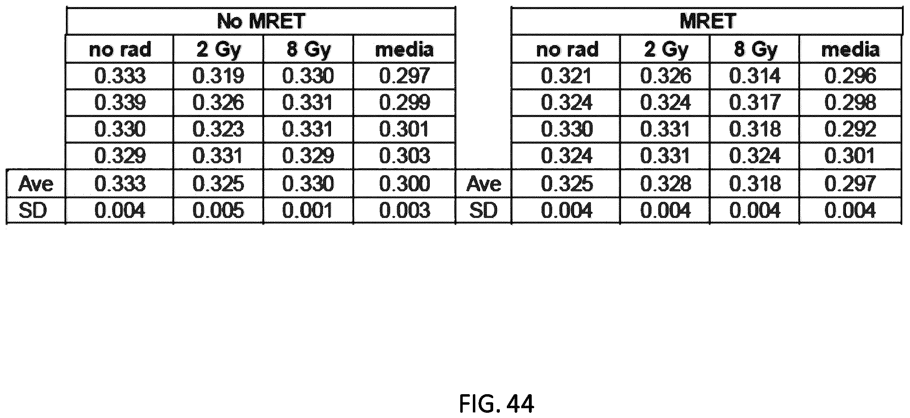

**FIG. 43** is a graph showing the effect of "activated" media (MRET) on PBMCs compared to control (no MRET) after 72 hrs. The average values of quadruplicate wells are plotted. Error bars represent standard deviations. **FIG. 44** is a table showing the corresponding average values and standard deviation of quadruplicate wells.

For the PBMCs, little signal over that of the background media alone was observed. The most likely cause is the low cell numbers seeded into the wells. Increasing the number of PBMCs seeded in the wells may help resolve this. In addition, activation of the PBMCs with PHA to proliferate will also boost the signal if a low starting number of cells is required.

**EXAMPLE 8**

**ACCELERATING SEED GERMINATION USING ACTIVATED WATER**

Also disclosed is the use of activated water for accelerating seed germination. An exemplary method includes activating water or liquid by exposing the water or liquid to low frequency oscillations of 0.5 to 5.0 Hz from an activation assembly that simultaneously applies an alternating electric current at a frequency between 7.2 Hz and 8 Hz and applies light at a wavelength between 400 nm and 800 nm to a polymer activation body that in response produces the low frequency oscillations; and maintaining a plant seed under moist conditions through germination, where the moisture is from the activated water or liquid.

As a demonstration of the use of activated water or liquid to accelerate seed germination, the effect of activated water was assessed on seed germination for cabbage, pumpkin, string bean, garden radish and peas.

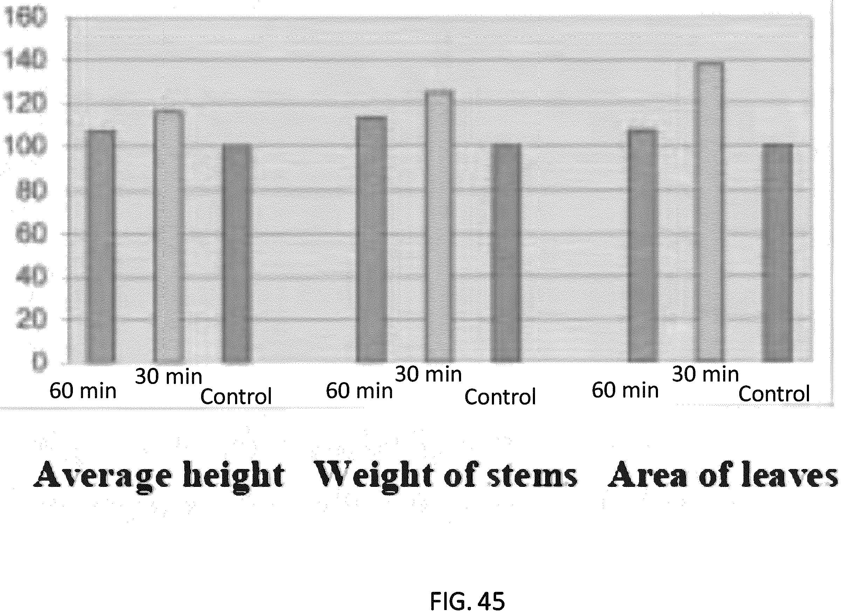

Seeds were germinated using distilled water activated for 30 minutes, 60 minutes or using regular non-activated water. After germination, watering continued as plants grew. Plants were then measured and averaged for height, stem weight and leaf area. Activated water was found to accelerate seed gemination. (data not shown). **FIG. 45** shows that compared to control, watering with "activated" water increased average height, stem weight and leaf area with 30 minutes of activation providing the greatest increase.

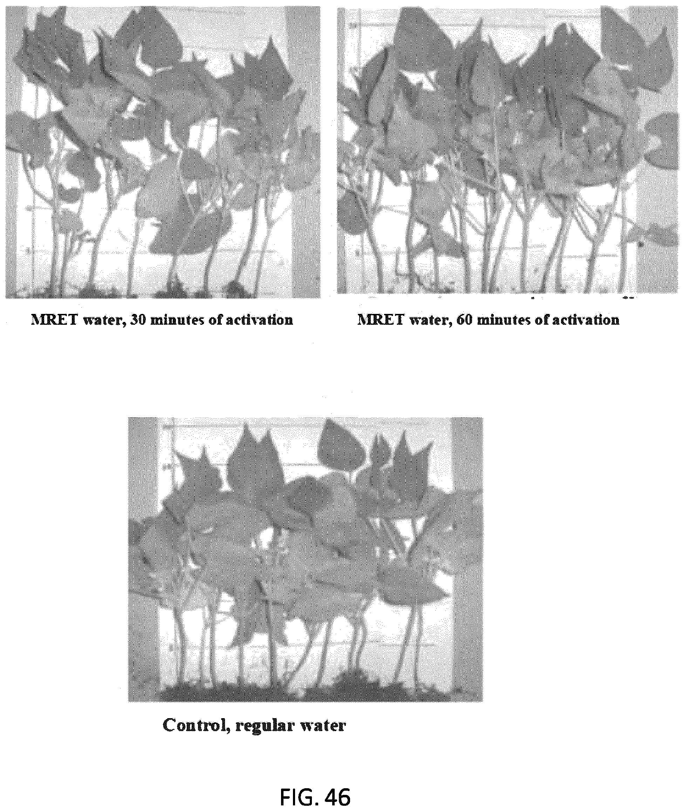

**FIG. 46** provides a series of photographs showing plants grown with water activated for 30 min (left), water activated for 60 minutes (center) and regular water (right).

**EXAMPLE 9**

**INHIBITING OR REDUCNG VIRAL INFECTION INTO HUMAN CELLS USING ACTIVATED WATER**

Also disclosed is use of activated water for reducing or inhibiting viral invasion of human cells, which includes: providing a subject having cells at risk of viral invasion; activating water or liquid by exposing the water or liquid to low frequency oscillations of 0.5 to 5.0 Hz from an activation assembly that simultaneously applies an alternating electric current at a frequency between 7.2 Hz to 8 Hz and applies light at a wavelength between 400 nm and 800 nm to a polymer composition that in response produces the low frequency oscillations; and administering the activated water or liquid to the subject daily. In some embodiments, the virus is a severe acute respiratory syndrome-associated coronavirus (SARS-CoV).

Previous research revealed that coronaviruses invade cells through so-called spike proteins. The spike protein is a surface protein used to bind to a cell receptor, which acts like a doorway into a human cell. After the spike protein binds to the human cell receptor, the viral membrane fuses with the human cell membrane, allowing the genome of the virus to enter human cells and begin infection.

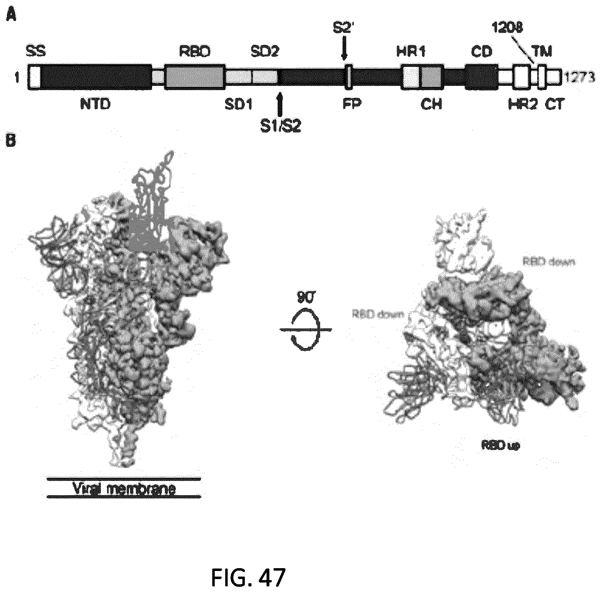

The overall structure of 2019-nCoV S resembles that of SARS-CoV S, with a root mean square deviation (RMSD) of 3.8 Å over 959 C$\alpha$ atoms. One of the larger differences between these two structures (although still relatively minor) is the position of the RBDs in their respective down conformations (**FIG. 47**). Despite this observed conformational difference, when the individual structural .domains of 2019-nCoV S are aligned to their counterparts from SARS-CoV S, they reflect the high degree of structural homology between the two proteins.

The SARS-CoV-2 spike protein has two key elements involved in infecting human cells. A string of amino acids in the S1 subunit directly binds to the protein-cleaving part of ACE2 called the peptidase domain. The S2 subunit of the spike protein helps the virus fuse to the human cell. Scientists have found that the protein-cleaving part of ACE2 binds the spike through polar interactions formed from a bridge-like structure on the enzyme. Both ends of the receptor binding domain stick to ACE2 through hydrogen bonding and van der Waals forces.

The stability of spike protein structure is based on the overall interactions of van der Walls weak electrodynamic forces and hydrogen bonding. The pre-fusion spike protein stability needs certain medium that supports required van der Walls interactions and hydrogen bonding to form the protein spike chain by coronavirus. It is obvious, that such medium is a water-based one, since all biochemical formations of proteins requires presence of water molecules in biological systems. The following transition of pre-fusion spike protein to post-fusion protein also requires specific water-based medium to support correct transition and formation of the bridges to help coronavirus fuse with the human cell membrane. The van der Waals forces among atoms and molecules generally act over relatively short distances, and are proportional to the inverse of the seventh power of the intermolecular distances for molecules and atoms. For two spheres of the same radius R, the interaction energy, W, as a function of the particle separation distance, D, is:

$$\mathrm{W}(D) = -\frac{A_{131}R}{12\,D} \text{ Equation (1)}$$

where the Hamaker constant, $A_{131}$, depends on the relative dielectric constants of the material 1 and medium 3.

Equation (1) yields for the significant role of the medium relative dielectric constant for the value of van der Waals interaction energy. It is seen from the equation the final character of the interaction between any bodies (molecules), its sign, and the intensity depend on the spectrum of the dielectric permittivity of these bodies and the water-salt medium in the region between them. The formation of any protein structures in the human body strictly depends on specific balance of dielectric property of protein molecules and water since it provides certain parameters of van der Walls forces to build such proteins. Dielectric property of water in its turn depends on temperature. We know from medicine that normal homeostasis of the human body is allowed at the precise physiological temperature parameters of the body: 35° C - 41° C on general basis. The drop of the body temperature below 35°C as well as the rise of the body temperature above 41° C leads to the inability to sustain life. There are research data indicating relation between dielectric constant of the human body tissue (TDC) and temperature: 35° C - 74.9 F/m (TDC) and 40° C - 73.2 F/m (TDC) (Fig. 1). It shows that normal homeostasis of the human body is allowed at certain range of electrodynamic van der Walls interactions following the small range of tissue dielectric property about 75 - 73 F/m. It is well correlated since we know from physics that relative dielectric permittivity of water is 80 F/m at room temperature (20° C). It allows us to suggest that dielectric property of human body tissue is very important physiological parameter. For example, for the full band of frequencies analyzed, the dielectric constant of malignant colon tissue is on average 8.8% higher than the dielectric constant of healthy one ($p = 0.002$). This difference is even higher at frequencies below 4 GHz.

Thus, normal healthy homeostasis of the human body directly depends on physiological temperatures and subsequently relative dielectric permittivity of the body liquids should be kept in the physiological range - a window of about 75 -73 F/m. Any type of shifting from this range may lead to development of diseases including body infection with pathogenic microorganisms. Considering mentioned above ideas, it allows us to hypothesize that most of biochemical proteins building mechanisms in a healthy human body require certain physiological range window of van der Waals interactions and hydrogen bonding between proteins molecules and water - salt medium. In theory, this physiological window of van der Waals weak electromagnetic forces may be *significantly different* from the range of electrodynamic van der Waals interactions required for life sustains formation of DNA/RNA proteins of viruses. The same type of general mechanism can be adopted for other lines of bacteria and viruses as well. Thus, modification of water-based medium electrodynamic parameters can lead to significant change of van der Walls interactions and hydrogen bonding that may result in the inhibition and interruption of proper formation of spike proteins chains. Such scenario obviously disables corona-virus life sequence of attachment and fusion with human cell membranes. We suggest such agent which can interrupt coronavirus life sequence is MRET water with anomalous electrodynamic characteristics. MRET water can be consumed on the regular basis by human subjects to prevent coronavirus infection.

MRET Activated Water is produced with the help of patented in the USA Molecular Resonance Effect Technology (MRET, US Patent # 6022479). MRET water activator is the stationary source of subtle, low-frequency, resonant electromagnetic field with composite structure. The origin of the low-frequency composite electromagnetic field is the intensive electrical activity inside the nano-circles formed by linear molecular groups of MRET polymer compound (volumetric fractal geometry matrix) when polymeric body is exposed to the external electromagnetic fields of specific frequency and wavelength. The significant reduction of values of electrical conductivity and dielectric permittivity confirms the relatively high, long-range dynamic structuring of water molecules in activated water produced with the help of MRET activation process. The long-term storage of activated water (up to 5 hours at 20°C) did not significantly affect its modified electrodynamic characteristics, thus confirming the ability of MRET activated water to keep its anomalous properties for rather long period of time in case of 30 minutes activation, and even higher level of -long-term water memory phenomenon in case of 60 minutes activation. The significant level of reduction of dielectric permittivity and electrical conductivity kept by MRET water activated for 30 minutes after it was heated to 72°C confirms its stability to thermal effects. It demonstrates the anomalous behavior of electrodynamic characteristics (dielectric permittivity and electrical conductivity) of MRET water subject to applied EMF (electromagnetic field) in the area of very low range of frequencies in order to provide some evidence regarding polarized-oriented multilayer structuring of MRET activated water and the possible effect of MRET water on the proper function of cells in biological systems.

Severe acute respiratory syndrome (SARS) is a febrile respiratory illness. The disease has been etiologically linked to a novel coronavirus that has been named the SARS-associated coronavirus (SARS-CoV), whose genome was recently sequenced. Since it is a member of the Corona-viridae, its spike protein (S2) is believed to play a central role in viral entry by facilitating fusion between the viral and host cell membranes. The protein responsible for viral-induced membrane fusion of HIV-1 (gp41) differs in length and has no sequence homology with S2. Infection by many enveloped viruses requires fusion of the viral and cellular membranes. A viral envelope protein mediates this membrane fusion process. These proteins are synthesized as precursors (ENV in Retroviridae, and E2 in Coronaviridae) that are later processed into a transmembrane subunit (gp41 in the retrovirus HIV-1, and S2 in the coronavirus SARS-CoV) that is responsible for viral-induced membrane fusion, and a surface subunit that is responsible for the interaction with the cellular receptor/s. This study points to a similar mode of action for the two viral proteins, suggesting that anti-viral strategy that targets the viral-induced membrane fusion step can be adapted from HIV-1 to SARS-CoV (see **FIG. 48**). Recently the FDA approved Enfuvirtide, a synthetic peptide corresponding to the C-terminal heptad repeat of HIV-1 gp41, as an anti-AIDS agent. Enfuvirtide and C34, another anti-HIV-1 peptide, exert their inhibitory activity by binding to a leucine/isoleucine zipper-like sequence in gp41, thus inhibiting a conformational change of gp41 required for its activation. We suggest that peptides corresponding to the C-terminal heptad repeat of the S2 protein may serve as inhibitors for SARS-CoV entry.

The clinical observation was performed at Thammarakniwet Foundation, WAT Phrabaatnamphu, Lopburi Province, Thailand. The investigation was conducted under the supervision of Dr. Peerayot Trongsawad, MD, Director of AIDS Control Department, Bangkok Metropolis.

The study was conducted on 38 AIDS patients during August, 2004 - August, 2005. All patients were consuming 1.5 liters of MRET activated water per day as a complimentary treatment in addition to the prescribed Anti-HIV medications. During the course of clinical observation all 38 patients were tested on a regular basis for CD4 counts and required to submit weekly reports regarding their health conditions. There was simultaneous observation of other group of AIDS patients during the same period of time (control group). They were on the same type of prescribed Anti-HIV medication, but without the complimentary consumption of MRET water.

First method: collection and analysis of the weekly health condition reports and CD4 counts reports; Second method: group interviews and personal interviews with patients which participate in this observation. 38 patients of the age between 19 and 49 years old were selected for the clinical trial. Summarizing the observation results we can indicate that in compliance with the studied gradations of AIDS patients health conditions 36 patients showed significant improvement and 2 patients did not show any improvement of their health condition. Some patients were selected to undergo two tests at the Bangkok Pathology Laboratories. One test was the reading of the level of CD4 counts (immune system) and the other was Viral Load (the amount of virus in the body) For CD4 reading, a healthy body should have a range of 800 - 1200 cells / microliter.

For Viral Load, the instrument has the ability to measure from 50 - 5000 copies / ml. The lower the number, the lesser the virus in the body, and subsequently lesser it attacks the patient's body.

In a first patient (Mr. Sa-ad), CD4 counts increased from 2 to 840 within 11 months of consumption of MRET activated water. His Viral Load was less than 50. His skin recovered back from abnormal dark color to normal one.

In a second patient (Mr. Un-ruang), CD4 counts increased from 90 to 805 within 3 months of consumption of MRET activated water. His Viral Load was also less than 50. His skin recovered back from abnormal dark color to normal one.

As to patients without MRET activated water, they did not show any significant improvement of their health condition.

We observed positive results of MRET water complimentary treatment for HIV patients during the clinical trial conducted at Thammarakniwet Foundation, WAT Phrabaatnamphu, Lopburi Province, Thailand. The recent research data allows to point to a similar mode of action for the two viral proteins, suggesting that anti-viral strategy that targets the viral-induced membrane fusion step can be adapted from HIV-1 to SARS-CoV. We suggest that MRET water consumption by patients can lead to the modification of dielectric permittivity, electrical conductivity and hydrogen bonding of water-based medium in the human body. It leads to the significant change of van der Walls interactions and hydrogen bonding; those result in the inhibition and interruption of proper formation of virus spike proteins chains. Such scenario obviously disables coronavirus life sequence of attachment and fusion with human cell membranes. The same type of general mechanism can be adopted for other lines of bacteria and viruses.

## EXAMPLE 10

### PREVENTING OR REDUCING INFLAMATION DUE TO BACTERIAL INFECTION THROUGH THE USE OF ACTIVATED WATER

Also provided is use of the activated water for preventing or reducing bacterial infection, which includes providing a subject at risk of bacterial infection; activating water or liquid by exposing the water or liquid to low frequency oscillations of 0.5 to 5.0 Hz from an activation assembly that simultaneously applies an alternating electric current at a frequency between 7.2 Hz to 8 Hz and applies light at a wavelength between 400 nm and 800 nm to a polymer composition that in response produces the low frequency oscillations; and administering the activated water or liquid to the subject daily.

The significant protective properties of MRET water were confirmed by substantial decrease of *Staphylococcus* CFU (colony forming units) in homogenate of kidneys of mice on MRET water compared to control group of mice following the intra-peritoneal staphylococcal infection after the first 24 h. For this purpose the kidneys of animals were dealt individually. The analysis of data in the beginning of experiments leads to the conclusion that significant decrease of pathogen's colonies in homogenate of kidneys of mice on MRET water begins only after 24 h following the inoculation of S. *aureus.*

The significant protective properties of MRET water were confirmed by substantial decrease of *Staphylococcus* CFU (colony forming units) in homogenate of kidneys of mice on MRET water compared to control group of mice following the intra-peritoneal staphylococcal infection after the first 24 h. For this purpose the kidneys of animals were dealt individually. The consumption of MRET water reduced the death rate from 30% (control group) to 0% (MRET groups) during the first 9 days of experiment. There was no case of animal death in all investigated groups within the first 24 h after intra-peritoneal inoculation of *Staphylococcus* culture, which is a pretty standard result.

During the next 8 days 30% of animals died in control group which is an expected result for such experimental procedure. There was no death case in both groups of mice that ingested MRET activated water and it is a very unusual result. Nevertheless, the main consequences of *Staphylococcus* infection do not manifest in death of animals as in case of oncology diseases. *Staphylococcus* bacteria affect the live systems and organs of the body. These pathogenic microorganisms cause inflammations, suppurations, abscesses, furuncles, quinsy, cepsical conditions, etc. That's why a detailed investigation of the process of stimulation by MRET water of phagocytes and of lymphoid organs of immune system of mice infected with *S.aureus* culture was conducted and is presented in this report.

The local inflammation was induced with the help of the inoculation of *S. aureus* culture into the hind left paw. The ordinary inflammatory reaction was observed in the group of mice on nonactivated water: the intensive reddening of the hind left paw. Both groups of mice on MRET water did not develop any reddening of the hind left paw inoculated with *S. aureus* culture. The results of this experiment confirm the fact of the substantial inhibition of inflammatory infection in case of the regular consumption of MRET water.

Phagocytosis is the main mechanism of natural resistance especially at the first stage of contagious process; it is a regular part of formation of the specific immune response. The most common methodology applied in the studies of the functional activity of phagocytes is the examination of their phagocytic (engulfing of alien cells) and oxygen dependent bactericidal activity. Phagocytic activity of neutrophils and macrophages is estimated based on Phagocytic Index (percentage of phagocytes which engulfed test-bacteria) and on Phagocytic Number (average number of test-bacteria engulfed by one phagocyte).

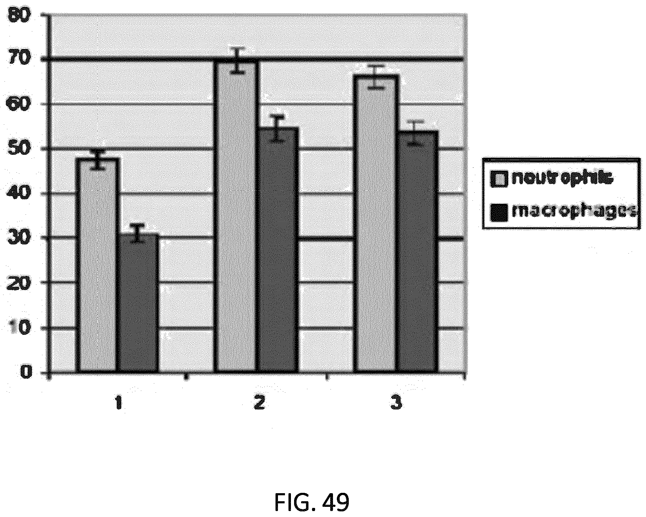

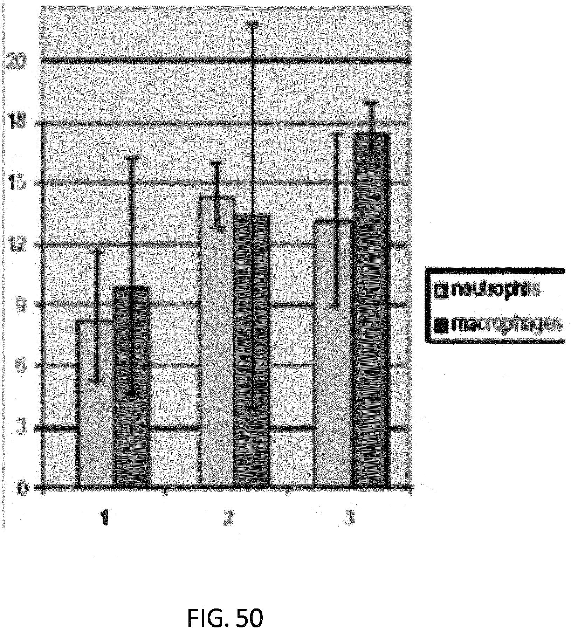

The cultures of *S. aureus* and Latex are usually used as test-bacteria. The oxygen-dependent bactericidal activity of phagocytes is studied with the help of NBT-test: an oxygen-dependent reduction of Nitro Blue Tetrazolium into an insoluble Diformazan of Nitro Blue Tetrazolium derivative by phagocytes. With the help of NBT-test it is possible to distinguish the activated phagocytes from the nonactivated ones. MRET water stimulated the phagocytic capacities of neutrophils of a peripheral blood and peritoneal macrophages increasing their phagocytic activity, particularly Phagocytic Index (**FIG. 49**) and Phagocytic Number (**FIG. 50**).

At the end of two weeks of experiment the mean values of studied parameters in both groups of mice on MRET water substantially increased compared to the control group. The differences in mean values of the parameters of functional activity of phagocytes of groups of mice consuming MRET water compared to the control group of mice on non-activated water were statistically significant with $p < 0.05$ (for Phagocytic Index and NBT-test). These results confirm the significant intensification of phagocytic and bactericidal activity and of immune system response following the consumption of MRET water. The *in vivo* experiment revealed that the mean values of studied parameters in both groups of mice on MRET water (preventive for 4 and 2 weeks respectively) significantly increased compared to the control group. The differences in mean values of the studied parameters of the groups of mice consuming MRET water compared to the control group of mice on non-activated water were statistically significant with $p < 0.05$ (for most of the parameters). Particularly, the consumption of MRET water reduced the death rate from 30% (control group of mice on non-activated water) to 0% (two groups of mice on MRET water) during the first 9 days of experiment after intra-peritoneal inoculation of *Staphylococcus* culture. The significant bacteriostatic effect of 70 - 100% (depending on initial concentrations of pathogens) was observed *in vitro* for MRET-activated nutrient medium in this investigation. These results confirm the significant intensification of phagocytic activity and of immune system response following the consumption of MRET water.

**Claims**

1. A system (100) for the activation of water, the system comprising:

   A) at least two activation tanks (104), each configured for storing at least 7580 liters [2,000 gallons] of water during activation and having a switch (110) that indicates the tank is full, wherein the switch (110) is operably connected to a controller with control panel (200) that instructs a valve to close when receiving a stop signal from the switch (110), thereby stopping the flow of water into the tank (104) when full;
   B) an activation assembly (116) operably connected to each activation tank (104), each activation assembly (116) comprising:

   i. a solenoid (124) comprising a column (120) wrapped in wiring (122), wherein the solenoid (124) is configured to generate a magnetic field between 198,950 A/m [2,500 Oersteds] and 1,989,500 A/m [25,000 Oersteds];
   ii. a polymeric composition held within the column (120) and exposed to the magnetic field, the polymeric composition comprising a polymer having a linear chain length of at least 38 monomer units, and dispersed within the polymeric composition is a mixture having between 0.04 -30 parts by weight per 100 parts by weight of polymer, at least one member selected from each of least two classes of:

   a) a first class including a metal, metal oxide, metal nitrate and/or a metal sulfate,
   b) a second class including an inorganic acid, and
   c) a third class including an aminoaldehyde;

   iii. a cluster of light emitted diodes (LEDs) (126) emitting at the polymer composition, an emission wavelength between 540 nm and 560 nm, the cluster of LEDS (126) configured to flash at a frequency between 7.2 Hz and 8.2 Hz; and

C) a means for powering (114) the activation assembly (116);
**characterized in that**:
each activation tank stores at least 7580 liters [2,000 gallons] of liquid during activation and each column holds at least 32,000 cm$^3$ of the polymeric composition.

2. The system of claim 1, wherein:

   a. each activation tank (104) holds 11,370 liters [3000 gallons]; and
   b. the activation assembly (116) comprises 7 LEDs (126).

3. The system of claim 1, further comprising a reverse osmosis system (106) upstream of the liquid activation assembly (116).

4. A method of water activation, the method comprising the steps of:

   a) providing the system (100) of claim 1;
   b) filling each of two activation tanks (104) with 11,370 liters [2,000 gallons] of water;
   c) powering the activation assembly (116) to produce magnetic field between 198,950 A/m [2,500 Oersteds] and 1,989,500 A/m [25,000 Oersteds] and to flash the LEDs at a frequency between 7.2 Hz and 8.2 Hz for at least 1 hour, thereby inducing low frequency oscillations of 0.5 to 5.0 Hz.

5. A method for reducing or inhibiting tumor cell proliferation the method comprising: activating water according to the method of claim 4; and exposing tumor cells to the activated water.

6. A method of enhancing NK cell killing of tumor cells, the method comprising:

   activating water according to the method of claim 4;
   exposing NK cells to the activated water; and
   exposing tumor cells to the exposed NK cells.

7. A method of preparing activated water for use in preventing or reducing amyloid plaques by daily administering the activated water to a subject suffering from or at risk of suffering from the formation of amyloid plaques, the method comprising:

   activating water according to the method of claim 4; and
   providing the activated water for administration.

8. A method of preparing activated water for use in a cream or gel for preventing or ameliorating effects psoriasis by topically administering the cream or gel to a region of skin affected with psoriasis, the method comprising:

   activating water according to the method of claim 4; and
   providing the activated water for use in the cream or gel.

9. A method of reducing or inhibiting microbial growth on a surface, the method comprising:

   activating water according to the method of claim 4; and
   applying the activated water to a surface at risk of microbial growth.

10. A method of enhancing the effects of an antibiotic, the method comprising:

    activating water according to the method of claim 4; and
    administering an antibiotic in combination with the activated water to a surface at risk of microbial growth.

11. A method of accelerating seed germination, the method comprising:

    activating water according to the method of claim 4; and
    maintaining a plant seed under moist conditions using the activated water through germination.

12. A method of preparing activated water for use in reducing or inhibiting viral invasion of human cells by providing a subject having cells at risk of viral invasion; and administering the activated to the subject daily, the method comprising:

activating water according to the method of claim 4; and
providing the activated water for administration.

13. The method of claim 12, wherein the virus is a severe acute respiratory syndrome-associated coronavirus (SARS-CoV).

**Patentansprüche**

1. Ein System (100) für die Aktivierung von Wasser, das System umfassend:

A) mindestens zwei Aktivierungstanks (104), von denen jeder so konfiguriert ist, dass er mindestens 7580 Liter [2.000 Gallonen] Wasser während der Aktivierung speichern kann, und einen Schalter (110) aufweist, der anzeigt, dass der Tank voll ist, wobei der Schalter (110) funktionell mit einer Steuerung mit Bedienfeld (200) verbunden ist, die ein Ventil anweist, sich zu schließen, wenn sie ein Stoppsignal von dem Schalter (110) empfängt, wodurch der Wasserfluss in den Tank (104) gestoppt wird, wenn er voll ist;

B) eine Aktivierungsanordnung (116), die funktionell mit jedem Aktivierungsbehälter (104) verbunden ist, jede Aktivierungsanordnung (116) umfassend:

i. ein Solenoid (124), das eine mit einer Verdrahtung (122) umwickelte Säule (120) umfasst, wobei das Solenoid (124) so konfiguriert ist, dass es ein Magnetfeld zwischen 198.950 A/m [2.500 Oersted] und 1.989.500 A/m [25.000 Oersted] erzeugt;
ii. eine Polymerzusammensetzung, die in der Säule (120) gehalten wird und dem Magnetfeld ausgesetzt ist, wobei die Polymerzusammensetzung ein Polymer mit einer linearen Kettenlänge von mindestens 38 Monomereinheiten umfasst und in der Polymerzusammensetzung ein Gemisch dispergiert ist, das zwischen 0,04 - 30 Gewichtsteile pro 100 Gewichtsteile Polymer aufweist, wobei mindestens ein Mitglied aus jeder von mindestens zwei Klassen ausgewählt ist, nämlich

a) einer ersten Klasse, die ein Metall, ein Metalloxid, ein Metallnitrat und/oder ein Metallsulfat umfasst,
b) einer zweiten Klasse, die eine anorganische Säure umfasst, und
c) einer dritten Klasse, umfassend ein Aminoaldehyd;

iii. eine Gruppe von Leuchtdioden (LEDs) (126), die bei der Polymerzusammensetzung eine Emissionswellenlänge zwischen 540 nm und 560 nm emittieren, wobei die Gruppe von LEDs (126) so konfiguriert ist, dass sie mit einer Frequenz zwischen 7,2 Hz und 8,2 Hz blitzt; und

C) ein Mittel zum Betreiben (114) der Aktivierungsanordnung (116);

**dadurch gekennzeichnet, dass**:
jeder Aktivierungstank mindestens 7580 Liter [2.000 Gallonen] Flüssigkeit während der Aktivierung speichert und jede Säule mindestens 32.000 cm3 der Polymerzusammensetzung enthält.

2. Das System nach Anspruch 1, wobei:

a. jeder Aktivierungstank (104) 11.370 Liter [3000 Gallonen] fasst; und
b. die Aktivierungsanordnung (116) 7 LEDs (126) umfasst.

3. System nach Anspruch 1, umfassend ferner ein Umkehrosmosesystem (106) stromaufwärts von der Flüssigkeitsaktivierungsanordnung (116).

4. Ein Verfahren zur Wasseraktivierung, wobei das Verfahren die folgenden Schritte umfasst:

a) Bereitstellen des Systems (100) nach Anspruch 1;
b) Füllen jedes der beiden Aktivierungstanks (104) mit 11.370 Litern [2.000 Gallonen] Wasser;

c) Betreiben der Aktivierungsanordnung (116), um ein Magnetfeld zwischen 198.950 A/m [2.500 Oersted] und 1.989.500 A/m [25.000 Oersted] zu erzeugen und die LEDs mit einer Frequenz zwischen 7,2 Hz und 8,2 Hz mindestens 1 Stunde lang blitzen zu lassen, wodurch niederfrequente Schwingungen von 0,5 bis 5,0 Hz induziert werden.

5. Verfahren zur Verringerung oder Hemmung der Proliferation von Tumorzellen, das Verfahren umfassend: Aktivieren von Wasser nach dem Verfahren von Anspruch 4; und Aussetzen von Tumorzellen dem aktivierten Wasser.

6. Verfahren zur Steigerung der NK-Zellabtötung von Tumorzellen, das Verfahren umfassend:

Aktivieren von Wasser nach dem Verfahren des Anspruchs 4;
Aussetzen von NK-Zellen gegenüber dem aktivierten Wasser; und
Aussetzen von Tumorzellen gegenüber den ausgesetzten NK-Zellen.

7. Verfahren zur Herstellung von aktiviertem Wasser zur Verwendung bei der Verhinderung oder Verringerung von Amyloid-Plaques durch tägliche Verabreichung des aktivierten Wassers an ein Subjekt, das an der Bildung von Amyloid-Plaques leidet oder gefährdet ist, daran zu leiden, das Verfahren umfassend:

Aktivieren von Wasser nach dem Verfahren von Anspruch 4; und
Bereitstellen des aktivierten Wassers zur Verabreichung.

8. Verfahren zur Herstellung von aktiviertem Wasser zur Verwendung in einer Creme oder einem Gel zur Vorbeugung oder Linderung von Psoriasis-Effekten durch topische Verabreichung der Creme oder des Gels auf einen von Psoriasis betroffenen Hautbereich, das Verfahren umfassend:

Aktivieren von Wasser nach dem Verfahren von Anspruch 4; und
Bereitstellen des aktivierten Wassers zur Verwendung in der Creme oder dem Gel.

9. Verfahren zur Verringerung oder Hemmung von mikrobiellem Wachstum auf einer Oberfläche, das Verfahren umfassend:

Aktivieren von Wasser nach dem Verfahren des Anspruchs 4; und
Aufbringen des aktivierten Wassers auf eine Oberfläche, auf der die Gefahr von mikrobiellem Wachstum besteht.

10. Verfahren zur Steigerung der Wirkung eines Antibiotikums, das Verfahren umfassend:

Aktivieren von Wasser nach dem Verfahren des Anspruchs 4; und
Verabreichen eines Antibiotikums in Kombination mit dem aktivierten Wasser auf eine Oberfläche, auf der ein Risiko für mikrobielles Wachstum besteht.

11. Verfahren zur Beschleunigung der Keimung von Saatgut, das Verfahren umfassend:

Aktivieren von Wasser nach dem Verfahren von Anspruch 4; und
Halten eines Pflanzensamens unter feuchten Bedingungen unter Verwendung des aktivierten Wassers während der Keimung.

12. Verfahren zur Herstellung von aktiviertem Wasser zur Verwendung bei der Verringerung oder Hemmung der viralen Infektion menschlicher Zellen durch Bereitstellen eines Subjekts mit Zellen, bei denen das Risiko einer viralen Infektion besteht, und tägliches Verabreichen des aktivierten Wassers an das Subjekt, das Verfahren umfassend:

Aktivieren von Wasser nach dem Verfahren von Anspruch 4; und
Bereitstellen des aktivierten Wassers zur Verabreichung.

13. Verfahren nach Anspruch 12, wobei das Virus ein mit dem schweren akuten respiratorischen Syndrom assoziiertes Coronavirus (SARS-CoV) ist.

# EP 3 945 072 B1

**Revendications**

1. Système (100) pour l'activation de l'eau, le système comprenant :

   A) au moins deux réservoirs d'activation (104), dont chacun est configuré de telle sorte qu'il peut stocker au moins 7 580 litres [2 000 gallons] d'eau pendant l'activation, et un commutateur (110) qui indique que le réservoir est plein, dans lequel le commutateur (110) est fonctionnellement relié à une commande avec un panneau de commande (200) qui commande la fermeture d'une vanne lorsqu'elle reçoit un signal d'arrêt du commutateur (110), en sorte que l'écoulement d'eau dans le réservoir (104) est arrêté lorsqu'il est plein ;

   B) un agencement d'activation (116) qui est fonctionnellement relié à chaque réservoir d'activation (104), chaque agencement d'activation (116) comprenant :

   i. un solénoïde (124) qui comprend une colonne (120) entourée d'un câblage (122), dans lequel le solénoïde (124) est configuré de telle sorte qu'il génère un champ magnétique compris entre 198 950 A/m [2 500 Oersted] et 1 989 500 A/m [25 000 Oersted] ;
   ii. une composition polymère qui est maintenue dans la colonne (120) et exposée au champ magnétique, dans lequel la composition polymère comprend un polymère ayant une longueur de chaîne linéaire d'au moins 38 motifs monomères et dans la composition polymère est dispersé un mélange qui comporte entre 0,04 et 30 parties en poids pour 100 parties en poids de polymère, dans lequel au moins un élément est choisi dans chacune d'au moins deux classes, à savoir

   a) une première classe qui comprend un métal, un oxyde de métal, un nitrate de métal et/ou un sulfate de métal,
   b) une deuxième classe qui comprend un acide inorganique, et
   c) une troisième classe qui comprend un amino-aldéhyde ;

   iii. un groupe de diodes électroluminescentes (LED) (126) qui émettent pour la composition polymère une longueur d'onde d'émission comprise entre 540 nm et 560 nm, dans lequel le groupe de LED (126) est configuré de telle sorte qu'il clignote à une fréquence comprise entre 7,2 Hz et 8,2 Hz ; et

   C) un moyen (114) pour faire fonctionner l'agencement d'activation (116) ;
   **caractérisé en ce que** :
   chaque réservoir d'activation stocke au moins 7 580 litres [2 000 gallons] de liquide pendant l'activation et chaque colonne contient au moins 32 000 cm$^3$ de la composition polymère.

2. Système selon la revendication 1, dans lequel :

   a. chaque réservoir d'activation (104) contient 11 370 litres [3 000 gallons] ; et
   b. l'agencement d'activation (116) comprend 7 LED (126).

3. Système selon la revendication 1, comprenant en outre un système d'osmose inverse (106) en amont de l'agencement d'activation de liquide (116).

4. Procédé d'activation de l'eau, dans lequel le procédé comprend les étapes suivantes consistant à :

   a) fournir le système (100) selon la revendication 1 ;
   b) remplir chacun des deux réservoirs d'activation (104) avec 11 370 litres [2 000 gallons] d'eau ;
   c) faire fonctionner l'ensemble d'activation (116) afin de générer un champ magnétique compris entre 198 950 A/m [2 500 Oersted] et 1 989 500 A/m [25 000 Oersted] et laisser clignoter les LED à une fréquence comprise entre 7,2 Hz et 8,2 Hz pendant une durée d'au moins 1 heure, en induisant ainsi des oscillations à basse fréquence de 0,5 à 5,0 Hz.

5. Procédé pour réduire ou inhiber la prolifération de cellules tumorales, le procédé comprenant de :
   activer de l'eau selon le procédé de la revendication 4 ; et exposer des cellules tumorales à l'eau activée.

6. Procédé pour augmenter la destruction de cellules NK de cellules tumorales, le procédé comprenant de :

   activer de l'eau selon le procédé de la revendication 4 ;

exposer des cellules NK à l'eau activée ; et
exposer des cellules tumorales aux cellules NK exposées.

7. Procédé de production d'eau activée destinée à être utilisée pour prévenir ou réduire des plaques amyloïdes en administrant quotidiennement l'eau activée à un sujet souffrant ou risquant de souffrir de la formation de plaques amyloïdes, le procédé comprenant de :

activer de l'eau selon le procédé de la revendication 4 ; et
fournir l'eau activée destinée à être administrée.

8. Procédé de production d'eau activée destinée à être utilisée dans une crème ou un gel pour prévenir ou soulager les effets du psoriasis en administrant par voie topique la crème ou le gel sur une zone cutanée affectée par le psoriasis, le procédé comprenant de :

activer de l'eau selon le procédé de la revendication 4 ; et
fournir l'eau activée destinée à être utilisée dans la crème ou le gel.

9. Procédé pour réduire ou inhiber une croissance microbienne sur une surface, le procédé comprenant de :

activer de l'eau selon le procédé de la revendication 4 ; et
appliquer l'eau activée sur une surface présentant un risque de croissance microbienne.

10. Procédé pour améliorer l'effet d'un antibiotique, le procédé comprenant de :

activer de l'eau selon le procédé de la revendication 4 ; et
administrer un antibiotique en combinaison avec l'eau activée sur une surface présentant un risque de croissance microbienne.

11. Procédé pour accélérer la germination de semences, le procédé comprenant de :

activer de l'eau selon le procédé de la revendication 4 ; et
maintenir une graine végétale dans des conditions humides en utilisant l'eau activée pendant la germination.

12. Procédé de production d'eau activée destinée à être utilisée pour réduire ou inhiber l'infection virale de cellules humaines en fournissant à un sujet des cellules présentant un risque d'infection virale, et en administrant quotidiennement l'eau activée au sujet, le procédé comprenant de :

activer de l'eau selon le procédé de la revendication 4 ; et
fournir l'eau activée destinée à être administrée.

13. Procédé selon la revendication 12, dans lequel le virus est un coronavirus associé au syndrome respiratoire aigu sévère (SARS-CoV).

FIG. 1

EP 3 945 072 B1

200

**TANK #1**

ACTIVATION
1 Hrs 00 Min
TIME REMAINING

IN PROCESS  COMPLETE

**SERVICE**

G Q

**MANUAL ACTIVATION**  START

**TANK STATUS**  IN USE  FILLING

ON/OFF  **START**

MRET MEDIA LIFE
7200 Hrs
TIME REMAINING

**TANK #2**

ACTIVATION
1 Hrs 00 Min
TIME REMAINING

IN PROCESS  COMPLETE

**MANUAL ACTIVATION**  START

**TANK STATUS**  IN USE  FILLING

ON/OFF

MRET MEDIA LIFE
200 Hrs
TIME REMAINING

204  206  202  208  210

**FIG. 2**

116

126

120

122

124

**FIG. 3A**

126

120

**FIG. 3B**

126

**FIG. 3C**

EP 3 945 072 B1

FIG. 4

| Types of treatment and fractions of used water | Investigated parameters | | | |
|---|---|---|---|---|
| | Average volume of ascitic fluid in one tumour, $<V>$, ml | Average number of viable tumor cells in 1 ml of ascitic fluid, $<C/V>$, $ml^{-1}$ ($*10^3$ cells) | Average number of viable tumor cells in peritoneal cavity of one mouse $<C>$, ($*10^6$ cells) | Index of tumor growth inhibition, D, % |
| Control, $t_{act} = 0$ | $2,85 \pm 0,2$ | $235724 \pm 44915$ | 672 | - |
| Prophylactic, $t_{act} = 15$ min | $1,6 \pm 0,1$ | $117354 \pm 35134$ | 188 | 43,6 |
| Prophylactic, $t_{act} = 30$ min | $1,4 \pm 0,07$ | $111268 \pm 23714$ | 156 | 50,9 |
| Prophylactic, $t_{act} = 45$ min | $1,5 \pm 0,1$ | $120068 \pm 11711$ | 180 | 47,4 |
| Prophylactic, $t_{act} = 60$ min | $2,2 \pm 0,08$ | $181868 \pm 36784$ | 400 | 22,8 |
| Prophylactic, "Old activated water", $t_{act} = 30$ min | $1,9 \pm 0,1$ | $161166 \pm 13774$ | 306 | 33,3 |
| Therapeutic, $t_{act} = 15$ min | $2,2 \pm 0,1$ | $193231 \pm 32144$ | 425 | 22,8 |
| Therapeutic, $t_{act} = 30$ min | $2,0 \pm 0,07$ | $151283 \pm 30561$ | 303 | 30,0 |
| Therapeutic, $t_{act} = 45$ min | $2,3 \pm 0,1$ | $150014 \pm 11301$ | 345 | 19,3 |
| Therapeutic, $t_{act} = 60$ min | $2,5 \pm 0,08$ | $210067 \pm 23677$ | 525 | 12,3 |
| Therapeutic, "Old activated water", $t_{act} = 30$ min | $2,2 \pm 0,1$ | $166541 \pm 23454$ | 366 | 22,8 |

FIG. 5

FIG. 6A

FIG. 6B

FIG. 6C

FIG. 7

FIG. 8

FIG. 9

| Type of treatment and fraction of used water | Number of animals | Observational data | | |
|---|---|---|---|---|
| | | Average life span $\langle t \rangle$, days | Median survival time, days | Percentage increase in life span, K, % |
| Control, $t_{act} = 0$ | 10 | $14.9 \pm 0.5$ | 15 | - |
| Prophylactic, $t_{act} = 15$ min | 10 | $21.7 \pm 0.7$ | 21 | 45,6 |
| Prophylactic, $t_{act} = 30$ min | 10 | $24.6 \pm 1.1$ | 26 | 61,7 |
| Prophylactic, $t_{act} = 45$ min | 10 | $21.6 \pm 0.9$ | 20 | 45,0 |
| Prophylactic, $t_{act} = 60$ min | 10 | $18.8 \pm 1.4$ | 17 | 26,2 |
| Prophylactic, "Old activated water", $t_{act} = 30$ min | 10 | $20.2 \pm 0.5$ | 23 | 35,6 |
| Therapeutic, $t_{act} = 15$ min | 10 | $18.6 \pm 0.5$ | 18 | 24,8 |
| Therapeutic, $t_{act} = 30$ min | 10 | $21.2 \pm 1.0$ | 19 | 42,3 |
| Therapeutic, $t_{act} = 45$ min | 10 | $21.2 \pm 1.1$ | 19 | 22,8 |
| Therapeutic, $t_{act} = 60$ min | 10 | $14.8 \pm 0.9$ | 14 | $\approx 0$ |
| Therapeutic, "Old activated water", $t_{act} = 30$ min | 10 | $18.3 \pm 1.3$ | 19 | 22,8 |

FIG. 10

FIG. 11A

FIG. 11B

Percentage increase in life span, K,%

FIG. 12

FIG. 13

FIG. 14

| Types of treatment and fractions of used water | Investigated parameters | | | Index of tumor growth inhibition, $D$, % |
|---|---|---|---|---|
| | Average volume of ascitic fluid in one tumour, $<V>$, ml | Average number of viable tumor cells in 1 ml of ascitic fluid $<C/V>$, $ml^{-1}$ ($*10^3$ cells) | Average number of viable tumor cells in peritoneal cavity of one mouse $<C>$ ($*10^6$ cells) | |
| Control, $t_{act} = 0$ | $3.1 \pm 0.3$ | $200454 \pm 24908$ | 621 | - |
| Prophylactic, $t_{act} = 15$ min | $2.2 \pm 0.09$ | $151324 \pm 15330$ | 333 | 29.0 |
| Prophylactic, $t_{act} = 30$ min | $2.0 \pm 0.07$ | $121161 \pm 13742$ | 242 | 35.5 |
| Prophylactic, $t_{act} = 45$ min | $2.1 \pm 0.1$ | $135030 \pm 12219$ | 284 | 32.3 |
| Prophylactic, $t_{act} = 60$ min | $2.8 \pm 0.08$ | $171266 \pm 23713$ | 479 | 9.7 |
| Prophylactic, "Old activated water", $t_{act} = 30$ min | $2.6 \pm 0.2$ | $141132 \pm 30716$ | 367 | 16.0 |
| Therapeutic, $t_{act} = 15$ min | $2.7 \pm 0.08$ | $183134 \pm 23164$ | 494 | 12.9 |
| Therapeutic, $t_{act} = 30$ min | $2.4 \pm 0.05$ | $160080 \pm 32501$ | 384 | 22.5 |
| Therapeutic, $t_{act} = 45$ min | $2.6 \pm 0.15$ | $169984 \pm 21671$ | 442 | 19.2 |
| Therapeutic, $t_{act} = 60$ min | $2.9 \pm 0.1$ | $220060 \pm 33007$ | 638 | 6.5 |
| Therapeutic, "Old activated water", $t_{act} = 30$ min | $2.7 \pm 0.2$ | $186842 \pm 30059$ | 504 | 12.4 |

FIG. 15

EP 3 945 072 B1

FIG. 16A

FIG. 16B

FIG. 16C

FIG. 17A

FIG. 17B

| Type of treatment and fraction of used water | Number of animals | Observational data | | |
|---|---|---|---|---|
| | | Average life span $<t>$, days | Median survival time, days | Percentage increase in life span, K, % |
| Control, $t_{act} = 0$ | 10 | $16.1 \pm 0.3$ | 17 | - |
| Prophylactic, $t_{act} = 15$ min | 10 | $22.2 \pm 0.5$ | 23 | 37,8 |
| Prophylactic, $t_{act} = 30$ min | 10 | $24.4 \pm 0.9$ | 26 | 51,6 |
| Prophylactic, $t_{act} = 45$ min | 10 | $22.1 \pm 0.7$ | 23 | 37,3 |
| Prophylactic, $t_{act} = 60$ min | 10 | $17.8 \pm 1.2$ | 18 | 10,6 |
| Prophylactic, "Old activated water", $t_{act} = 30$ min | 10 | $21,0 \pm 0,9$ | 22 | 30,4 |
| Therapeutic, $t_{act} = 15$ min | 10 | $19,0 \pm 0,5$ | 19 | 18,0 |
| Therapeutic, $t_{act} = 30$ min | 10 | $19,1 \pm 1,0$ | 19 | 18,3 |
| Therapeutic, $t_{act} = 45$ min | 10 | $18,7 \pm 1,0$ | 19 | 16,1 |
| Therapeutic, $t_{act} = 60$ min | 10 | $15,6 \pm 0,7$ | 15 | - 3.1 |
| Therapeutic, "Old activated water", $t_{act} = 30$ min | 10 | $18,4 \pm 1,3$ | 19 | 14.3 |

FIG. 18

EP 3 945 072 B1

FIG. 19A

FIG. 19B

Percentage increase in life span, K, %

FIG. 20

| Types of treatment and fractions of used water | Average number of viable tumor cells in micro-wells, $*10^3$ | Cytotoxicity index (CI, %) | Change of cytotoxicity index (in relation to nonactivated water), % |
|---|---|---|---|
| "Basal" tumor cells | 235.0 | 0 | -16 |
| Control, $t_{act} = 0$ | 197,5 | 16 | 0 |
| Reference immunostimulant (FMA) | 174,0 | 25.9 | 9.9 |
| Prophylactic, $t_{act}$ =15 min | 197,5 | 16 | 0 |
| Prophylactic, $t_{act}$ =30 min | 188,0 | 20 | 4.0 |
| Prophylactic, $t_{act}$ =45 min | 200,0 | 15 | -1.0 |
| Prophylactic, $t_{act}$ =60 min | 200,0 | 15 | -1.0 |
| Prophylactic, "Old activated water", $t_{act}$ =30 min | 195,0 | 17 | 1.0 |
| Therapeutic, $t_{act}$ =15 min | 202,0 | 14 | -2.0 |
| Therapeutic, $t_{act}$ =30 min | 195,0 | 17 | 1.0 |
| Therapeutic, $t_{act}$ =45 min | 200,0 | 15 | -1.0 |
| Therapeutic, $t_{act}$ =60 min | 202,5 | 13.8 | -2.2 |
| Therapeutic, "Old activated water", $t_{act}$ =30 min | 200,0 | 15 | -1.0 |

FIG. 21

EP 3 945 072 B1

FIG. 22

FIG. 23

FIG. 24

**Mortality Rate**

FIG. 25

$t_{act} = 1.0\ h$         $t_{act} = 0.5\ h$         Control

FIG. 26

FIG. 27

$t_{act} = 1.0\ h$

$t_{act} = 0.5\ h$

Control

FIG. 28

EP 3 945 072 B1

$t_{act} = 1$ h             $t_{act} = 0.5$ h             Control

FIG. 29

| Fraction of water | Initial averaged weight of one segment, mg | Final averaged weight of one segment, mg | Increase of a weight of one segment, mg | Coefficient of inhibition of kaluss tissues growth |
|---|---|---|---|---|
| $t_{act} = 1$ h | $20.2 \pm 0.1$ | $20.5 \pm 0.1$ | $0.3 \pm 0.2$ | 350...1000 |
| $t_{act} = 0.5$ h | $20.8 \pm 0.1$ | $21.2 \pm 0.1$ | $0.4 \pm 0.2$ | 300...900 |
| Control | $19.6 \pm 0.1$ | $193.5 \pm 0.1$ | $173.9 \pm 0.2$ | 1 |

FIG. 30

EP 3 945 072 B1

FIG. 31

Control sample.

$N = 1.7 \times 10^8$ cell/ml

30 minutes of activation.

$N = 6.4 \times 10^6$ cell/ml

60 minutes of activation.

$N = 5.2 \times 10^5$ cell/ml

FIG. 32

25 hours of experiment

18 hours of experiment

FIG. 33

FIG. 34A

FIG. 34B

FIG. 35

**No MRET**

|   | no rad | 2 Gy | 8 Gy | media |   |   |
|---|---|---|---|---|---|---|
| 1 | blank | blank | blank | blank | blank | blank |
| 2 | blank | blank | blank | blank | blank | blank |
| 3 | blank | replicate 1 | replicate 1 | replicate 1 | replicate 1 | blank |
| 4 | blank | replicate 2 | replicate 2 | replicate 2 | replicate 2 | blank |
| 5 | blank | replicate 3 | replicate 3 | replicate 3 | replicate 3 | blank |
| 6 | blank | replicate 4 | replicate 4 | replicate 4 | replicate 4 | blank |
| 7 | blank | blank | blank | blank | blank | blank |
| 8 | blank | blank | blank | blank | blank | blank |
|   | 1 | 2 | 3 | 4 | 5 | 6 |

**MRET**

|   | no rad | 2 Gy | 8 Gy | media |   |   |
|---|---|---|---|---|---|---|
| 1 | blank | blank | blank | blank | blank | blank |
| 2 | blank | blank | blank | blank | blank | blank |
| 3 | blank | replicate 1 | replicate 1 | replicate 1 | replicate 1 | blank |
| 4 | blank | replicate 2 | replicate 2 | replicate 2 | replicate 2 | blank |
| 5 | blank | replicate 3 | replicate 3 | replicate 3 | replicate 3 | blank |
| 6 | blank | replicate 4 | replicate 4 | replicate 4 | replicate 4 | blank |
| 7 | blank | blank | blank | blank | blank | blank |
| 8 | blank | blank | blank | blank | blank | blank |
|   | 1 | 2 | 3 | 4 | 5 | 6 |

FIG. 36

FIG. 37

| No MRET | | | | | MRET | | | |
|---|---|---|---|---|---|---|---|---|---|
| no rad | 2 Gy | 8 Gy | media | | no rad | 2 Gy | 8 Gy | media |
| 0.879 | 0.998 | 0.663 | 0.243 | | 0.710 | 0.835 | 0.791 | 0.254 |
| 0.889 | 0.972 | 0.632 | 0.263 | | 0.729 | 0.875 | 0.798 | 0.263 |
| 0.852 | 0.963 | 0.617 | 0.256 | | 0.694 | 0.839 | 0.770 | 0.257 |
| 0.854 | 0.991 | 0.630 | 0.263 | | 0.664 | 0.844 | 0.804 | 0.264 |
| Ave | 0.869 | 0.981 | 0.636 | 0.256 | Ave | 0.699 | 0.848 | 0.791 | 0.260 |
| SD | 0.018 | 0.016 | 0.020 | 0.009 | SD | 0.028 | 0.018 | 0.015 | 0.005 |

FIG. 38

FIG. 39

| No MRET | | | | | MRET | | | |
|---|---|---|---|---|---|---|---|---|---|
| no rad | 2 Gy | 8 Gy | media | | no rad | 2 Gy | 8 Gy | media |
| 1.820 | 1.826 | 1.174 | 0.233 | | 1.600 | 1.636 | 1.385 | 0.234 |
| 1.897 | 1.817 | 1.202 | 0.238 | | 1.657 | 1.537 | 1.362 | 0.233 |
| 2.034 | 1.762 | 1.188 | 0.244 | | 1.569 | 2.195 | 1.491 | 0.233 |
| 1.818 | 1.789 | 1.140 | 0.237 | | 1.557 | 1.541 | 1.580 | 0.229 |
| Ave | 1.892 | 1.799 | 1.176 | 0.238 | Ave | 1.596 | 1.727 | 1.455 | 0.232 |
| SD | 0.101 | 0.029 | 0.027 | 0.005 | SD | 0.045 | 0.315 | 0.101 | 0.002 |

FIG. 40

FIG. 41

| No MRET | | | | | MRET | | | |
|---|---|---|---|---|---|---|---|---|---|
| no rad | 2 Gy | 8 Gy | media | | no rad | 2 Gy | 8 Gy | media |
| 0.318 | 0.297 | 0.316 | 0.293 | | 0.327 | 0.301 | 0.320 | 0.295 |
| 0.318 | 0.321 | 0.324 | 0.302 | | 0.320 | 0.334 | 0.317 | 0.299 |
| 0.320 | 0.319 | 0.326 | 0.310 | | 0.318 | 0.331 | 0.325 | 0.298 |
| 0.304 | 0.313 | 0.306 | 0.301 | | 0.333 | 0.319 | 0.322 | 0.355 |
| Ave | 0.315 | 0.313 | 0.318 | 0.302 | Ave | 0.325 | 0.321 | 0.321 | 0.312 |
| SD | 0.007 | 0.011 | 0.009 | 0.007 | SD | 0.007 | 0.015 | 0.003 | 0.029 |

FIG. 42

EP 3 945 072 B1

FIG. 43

| No MRET | | | | | MRET | | | |
|---|---|---|---|---|---|---|---|---|
| no rad | 2 Gy | 8 Gy | media | | no rad | 2 Gy | 8 Gy | media |
| 0.333 | 0.319 | 0.330 | 0.297 | | 0.321 | 0.326 | 0.314 | 0.296 |
| 0.339 | 0.326 | 0.331 | 0.299 | | 0.324 | 0.324 | 0.317 | 0.298 |
| 0.330 | 0.323 | 0.331 | 0.301 | | 0.330 | 0.331 | 0.318 | 0.292 |
| 0.329 | 0.331 | 0.329 | 0.303 | | 0.324 | 0.331 | 0.324 | 0.301 |
| Ave | 0.333 | 0.325 | 0.330 | 0.300 | Ave | 0.325 | 0.328 | 0.318 | 0.297 |
| SD | 0.004 | 0.005 | 0.001 | 0.003 | SD | 0.004 | 0.004 | 0.004 | 0.004 |

FIG. 44

FIG. 45

MRET water, 30 minutes of activation          MRET water, 60 minutes of activation

Control, regular water

FIG. 46

FIG. 47

FIG. 48

FIG. 49

FIG. 50

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6022479 A

**Non-patent literature cited in the description**

- Urethane Polymers. KIRK-OTHMER CONCISE ENCYCLOPEDIA OF CHEMICAL TECHNOLOGY. 1985, 1211-1212
- HANDBOOK OF PLASTIC MATERIALS AND TECHNOLOGY. 1990, vol. 41,42, 501-524
- Modern Plastics Encyclopedia. October 1987, vol. 88, 97-98, 122, 124, 546
- Epoxy Resins. KIRK-OTHMER CONCISE ENCYCLOPEDIA OF CHEMICAL TECHNOLOGY. 1985, 431-433
- HANDBOOK OF PLASTIC MATERIALS AND TECHNOLOGY. 1990, vol. 72, 829-844
- Modern Plastics Encyclopedia. October 1987, vol. 88, 114, 516-517
- Furan Derivatives. KIRK-OTHMER CONCISE ENCYCLOPEDIA OF CHEMICAL TECHNOLOGY. 1985, 542-544
- **EGAWA, J.** ; **ISHIOKA, K.** ; **OGATA, T.** Effect of irradiation and chemotherapeutic agents on the capillaries of Ehrlich ascites carcinoma of mice. Acta radiologica: oncology, radiation, physics. *Biology*, 1979, vol. 18, 535-543
- **SIMON, P.** ; **BURLINGHAM, W. J.** ; **CONKLIN, R.** ; **FONDY, T. P.** N-bromoacetyl-beta-D-glucosamine tetra-O-acetate and N-bromoacetyl-beta-D-galactosamine tetra-O-acetate as chemotherapeutic agents with immunopotentiating effects in Ehrlich ascites tumor-bearing mice. *Cancer research*, 1979, vol. 39, 3897-3902